(19) 

Europäisches
Patentamt
European
Patent Office
Office européen
des brevets

(11) **EP 2 315 446 A1**

(12) **EUROPEAN PATENT APPLICATION**
published in accordance with Art. 153(4) EPC

(43) Date of publication:
**27.04.2011 Bulletin 2011/17**

(21) Application number: **09805017.2**

(22) Date of filing: **06.08.2009**

(51) Int Cl.:
***H04N 7/32*** *(2006.01)*

(86) International application number:
**PCT/JP2009/063916**

(87) International publication number:
**WO 2010/016534 (11.02.2010 Gazette 2010/06)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **08.08.2008 JP 2008206206**

(71) Applicant: **Sharp Kabushiki Kaisha
Osaka-shi, Osaka 545-8522 (JP)**

(72) Inventors:
• **YAMAMOTO, Tomoyuki
  Osaka 545-8522 (JP)**
• **IKAI, Tomohiro
  Osaka 545-8522 (JP)**

(74) Representative: **Müller - Hoffmann & Partner
Patentanwälte
Innere Wiener Strasse 17
81667 München (DE)**

(54) **DYNAMIC IMAGE ENCODING DEVICE AND DYNAMIC IMAGE DECODING DEVICE**

(57)     This invention corrects a motion-compensated image by a method suitable for the local characteristics of the moving image, while preventing an increase in an amount of encoded data. A moving image encoding device of this invention includes three motion-compensated image correcting sections (11, 12, 13) employing respective different correction methods. The moving image encoding device is configured so as to be capable of selecting one of motion-compensated images (109) corrected by the respective correction sections, the selected one of the motion-compensated images (109) being used as a predicted image (106).

F I G. 1

**Description**

Technical Field

The present invention relates to: a moving image encoding device for encoding a moving image so as to generate encoded data; and a moving image decoding device for reproducing the moving image from the encoded data.

Background Art

Most of conventional moving image encoding devices which perform inter-frame prediction employ motion compensated prediction in order to remove a temporal redundancy and improve a compression efficiency of a moving image.

The motion compensated prediction starts with derivation of a motion vector indicative of a distance and a direction in which an object is moved between a target frame and a reference frame. The target frame refers to a frame which is, at a certain time point, a target being to be encoded or decoded. The reference frame refers to a frame which has been already encoded or decoded at the certain time point. A local decoded image (hereinafter, also referred to as a "reference image") of the reference frame is stored in a frame memory.

Subsequently, a motion-compensated image is generated, and a difference between an input image of the target frame and the motion-compensated image is encoded. The motion-compensated image refers to an image constituted by pixel values of respective pixels of the reference image. To a pixel in each block of the motion-compensated image, a pixel value of a pixel in a corresponding block of the reference image is assigned. The corresponding block of the reference image is located away from the block of the motion-compensated image by a distance equivalent to a displacement represented by the motion vector.

A variance and absolute values of prediction residuals, which correspond to differences between (i) pixel values of the input image and (ii) pixel values of the motion-compensated image, are smaller than a variance and absolute values of the pixel values of the input image. Therefore, as compared with a case where the input image itself is encoded, encoding the prediction residuals can reduce an amount of generated encoded data. This enables the inter-frame prediction with improved compression efficiency.

Some conventional methods have been developed which reduce the absolute values and the variance of the prediction residuals in order to improve the performance of the motion compensated, prediction. For example, Non-Patent Literature 1 describes a method for (i) predicting a change in pixel value between frames and (ii) correcting a motion-compensated image based on the result of the prediction.

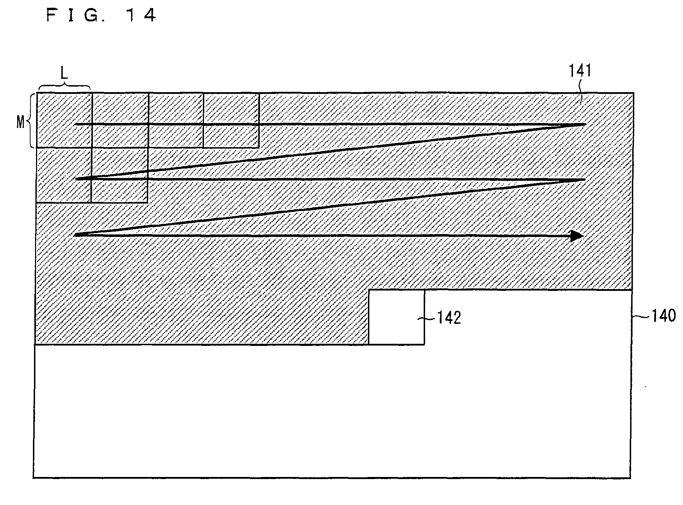

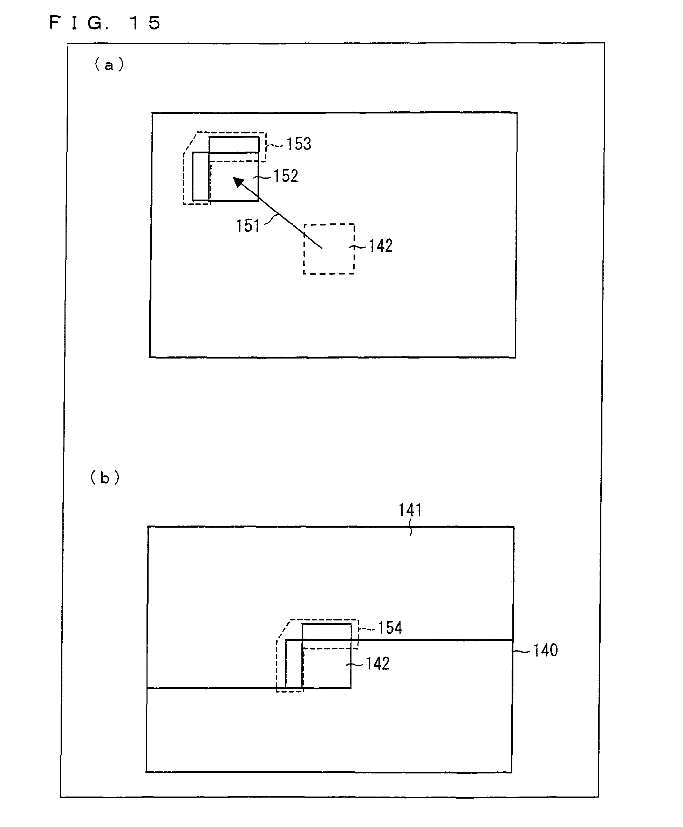

Here, the following will describe, with reference to Figs. 14 and 15, how the method of Non-Patent Literature 1 corrects the motion-compensated image.

First, Fig. 14 will be described. Fig. 14 is a view illustrating a local decoded image (hereinafter, also referred to as a "target image 140") of a target frame. As shown in Fig. 14, the target frame is divided into blocks each having a predetermined size (L × M pixels), and the target frame is encoded or decoded block by block. The arrow shown in Fig. 14 indicates an order in which the blocks are to be processed. Namely, the blocks are processed in a raster scanning order starting from a block at an upper left corner.

A region 141, indicated by a hatched region in Fig. 14, is a processed region which has been already encoded or decoded at a certain time point. On the other hand, a block 142 is a target block which is, at the certain time point, a target which is to be encoded or decoded.

Next, Fig. 15 will be described. (a) of Fig. 15 is a view illustrating a reference image. Particularly, (a) of Fig. 15 shows (i) a reference block 152, which is on a reference frame and is associated with the encoding target block 142 via a motion vector 151, and (ii) a reference block-neighboring region 153, which is adjacent to the reference block 152. (b) of Fig. 15 is a view illustrating the local decoded image of the target frame. Particularly, (b) of Fig. 15 shows the encoding target block 142 and an encoding target block-neighboring region 154, which is adjacent to the encoding target block 142.

According to the method of Non-Patent Literature 1, a motion-compensated image is corrected by the following procedure:

1. Differences in pixel value between (i) pixels in the encoding target block-neighboring region 154 and (ii) corresponding pixels in the reference block-neighboring region 153 are worked out.
2. Based on the differences in pixel value, correction values for respective pixels in the encoding target block 142 are worked out. Note that the correction value for each pixel in the encoding target block 142 is a weighted average of (i) a difference in pixel value for a pixel in an encoding target block-neighboring region 154 located immediately above the pixel in the encoding target block 142 and (ii) a difference in pixel value for a pixel in an encoding target block-neighboring region 154 located immediately on the left of the pixel in the encoding target block 142.
3. The correction values are added to a motion-compensated image which corresponds to the pixels in the encoding target block 142.

In the above procedure, based on the differences in pixel value between the encoding target block-neighboring region 154 and the reference block-neighboring region 153, a change in pixel value between the target image 140 and the reference image (i.e., a change in pixel value between frames) is predicted, and then the motion-compensated image is corrected. According to this procedure, it is possible to compensate for the change in pixel value between the frames by the correction. Consequently, the variance and the absolute values of the prediction residuals, which correspond to the difference between the corrected motion-compensated image and the encoding target block, are made smaller, as compared with a case involving use of a motion-compensated image having not been corrected. Accordingly, by encoding the prediction residuals, an amount of generated encoded data can be reduced, i.e., the compression efficiency can be enhanced.

Patent Literature 1 discloses another method for correcting a motion-compensated image. Disclosed in Patent Literature 1 is a method for compensating, in encoding a moving image in which a luminance change occurs in a broad range, for an amount of the luminance change occurring in the broad range. Specifically, the method of Patent Literature 1 uses, in order to compensate for the luminance change occurring in the broad range, not only (i) a parameter representing an amount of gain change, which corresponds to the amount of the luminance change occurring in the broad range between a target image 140 plane and a reference image plane, but also (ii) a parameter representing a contrast change. This allows further more efficient encoding of a moving image in which a luminance change occurs in a broad range, as compared with a conventional technique.

Citation List

[Patent Literature 1]
Japanese Patent Application Publication, Tokukaihei, No. 10-136385 A (May 22, 1998)
[Non-Patent Literature 1]
"VCEG-AH19: Weighted Prediction using Neighboring Pixels", ITU-T SG16 Q6, Meeting in Antalya, January 2008

Summary of Invention

Technical Problem

However, the method of Non-Patent Literature 1 involves a problem of failing to minimize an amount of encoded data. Namely, according to the method of Non-Patent Literature 1, in the encoding target block, the pixel value of each pixel in the motion-compensated image is always corrected by referring to (i) the difference in pixel value for the pixel in the encoding target block-neighboring region located immediately above the pixel and (ii) the difference in pixel value for the pixel in the encoding target block-neighboring region located immediately on the left of the pixel. Thus, the method of Non-Patent Literature 1 does not take advantage of a correlation between (i) a change in pixel value in the encoding target block and (ii) a change in pixel value in the encoding target block-neighboring region adjacent to the encoding target block. In terms of this, there is room for reduction of an amount of encoded data. This problem will be described more concretely below:

Firstly discussed is a case where a horizontal correlation between changes in pixel value is higher than a vertical correlation between changes in pixel value. In this case, correcting a motion-compensated image with use of a pixel in an encoding target block-neighboring region 154 which is located immediately on the left of a correction target pixel is more suitable than correcting the motion-compensated image with use of a pixel in an encoding target block-neighboring region 154 which is located immediately above the correction target pixel. The horizontal correlation herein refers to a correlation between (i) a change in pixel value between frames which change is observed in a left pixel and (ii) a change in pixel value between the frames which change is observed in a right pixel, the left and right pixels being adjacent to each other in a horizontal direction.

On the other hand, in a case where the vertical correlation between changes in pixel value is higher than the horizontal correlation, correcting the motion-compensated image with use of a change in pixel value of the pixel in the encoding target block-neighboring region 154 located immediately above the correction target pixel is more suitable. The vertical correlation refers to a correlation between (i) a change in pixel value between frames which change is observed in an upper pixel and (ii) a change in pixel value between the frames which change is observed in a lower pixel, the upper and lower pixels being adjacent to each other in a vertical direction.

Thus, with the arrangement for correcting the motion-compensated image by an effective correction method selected from a plurality of correction methods according to the local characteristics of the moving image, it is possible to reduce the variance and the absolute values of the prediction residuals, as compared with a case where a single correction method is always used. Accordingly, this arrangement can reduce an amount of encoded data of the moving image. Namely, as the number of selectable correction methods increases, a possibility of performing the correction by a more suitable method becomes higher, and the amount of encoded data is further reduced. On the other hand, the method of Non-Patent Literature 1 corrects the motion-compensated image by a single method. In terms of this, there is room for reduction in an encoding amount.

Meanwhile, the method of Patent Literature 1 is directed to only a moving image in which a luminance change occurs in a broad range. Therefore, the method of Patent Literature 1 involves a problem of being incapable of correcting a motion-compensated image in a manner suitable for the local characteristics of the moving image.

Here, as an approach for enabling a selection of an effective correction method from among a plurality of correction methods according to the local characteristics of the moving image, a method for encoding additional information indicative of a correction method which is to be used is considered. However, this method involves another problem that an amount of encoded data necessary to encode the moving image is increased by an amount of encoded data for the additional information.

The present invention was made in order to solve the foregoing problems, and an object of the present invention is to provide a moving image encoding device for correcting a motion-compensated image by a method suitable for local characteristics of a moving image, while preventing an increase in an amount of encoded data as much as possible. Further, an object of the present invention is to provide a moving image decoding device capable of decoding data encoded by the moving image encoding device.

Solution to Problem

In order to achieve the above object, a moving image encoding device of the present invention is a moving image encoding device for encoding, for each block, a difference between an input image and a predicted image, including: calculation means for working out an index indicative of a correlation between (i) a change in pixel value in the input image between frames which change is observed in an encoding target block and (ii) a change in pixel value in a local decoded image between the frames which change is observed in a neighboring region being adjacent to the encoding target block; a plurality of correction means each for correcting the motion-compensated image based on a change in pixel value in the local decoded image between the frames which change is observed in a respective one of mutually different regions included in the neighboring region; and selection means for selecting one of the plurality of correction means based on the index, so that the motion-compensated image corrected by the selected correction means is used as the predicted image.

According to the above configuration, based on the index indicative of the correlation between (i) the change in pixel value in the input image between the frames which change is observed in the encoding target block and (ii) the change in pixel value in the local decoded image between the frames which change is observed in the neighboring region being adjacent to the encoding target block, the one using a most suitable correction method is selected from among the plurality of motion-compensated image correcting sections, and then the motion-compensated image is corrected. This makes it possible to correct the motion-compensated image by a method more suitable for the local characteristics of the moving image, as compared with a case where a single correction method is always used to correct the motion-compensated image. Namely, this makes it possible to generate a predicted image with a higher accuracy, as compared with the conventional configurations. Consequently, it is possible to reduce an amount of encoded data necessary to encode the prediction residuals.

Note that the calculation means may work out the index by referring to any information, as long as the information is available at a time point when the encoding target block is subjected to encoding. Examples of the information that the calculation means can refer to in order to work out the index encompass a local decoded image, motion information (such as a motion vector, a reference image, a motion compensation system, and partition information), and an encoding mode (such as an intra-screen prediction mode, an inter-screen prediction mode, a skip mode, and a direct prediction mode), each of which is encoded prior to the encoding target block.

In the moving image encoding device of the present invention, it is preferable that the plurality of correction means include at least two of: first correction means for correcting the motion-compensated image based on a change in pixel value in the local decoded image between the frames which change is observed in a region adjacent to an upper side of the encoding target block; second correction means for correcting the motion-compensated image based on a change in pixel value in the local decoded image between the frames which change is observed in a region adjacent to a left side of the encoding target block; and third correction means for correcting the motion-compensated image based on changes in pixel value in the local decoded image between the frames which changes are respectively observed in (i) the region adjacent to the upper side of the encoding target block and (ii) the region adjacent to the left side of the encoding target block.

In a case where the encoding process is performed from an upper left corner to a lower right corner in a raster scanning order, while the encoding target block is being subjected to the encoding process, (i) the region adjacent to the upper side of the encoding target block and (ii) the region adjacent to the left side of the encoding target block have been already encoded. According to the moving image encoding device, once encoding of a certain block is completed, a local decoded image for the certain block is generated. Therefore, each of the first correction means, the second correction means, and the third correction means can correct the motion-compensated image by referring to a change occurred in the local decoded image between frames (i.e., the change between the target frame and the reference frame). Furthermore, the first correction means, the second correction means, and the third correction means refer to the respective different regions in order to correct the motion-compensated image. Therefore, by using at least two of these three correction means as needed, it is possible to correct the motion-compensated image by a method suitable for the local characteristics of the moving image.

In the moving image encoding device of the present invention, it is preferable that the calculation means works out the index by referring to a pixel value in the motion-compensated image.

The motion-compensated image is information which is available while the moving image encoding device is encoding the encoding target block. Furthermore, the motion-compensated image is information which is also available while the moving image decoding device is decoding the encoding target block. Therefore, the above configuration allows the moving image decoding device to select the same correction means as that selected by the moving image encoding device, without adding, to the encoded data generated by the moving image encoding device, any new information indicative of the correction means which was selected by the moving image encoding device.

Note that the index can be, for example, a numerical value indicative of an edge strength or an edge direction in the motion-compensated image.

In the moving image encoding device of the present invention, it is preferable that the calculation means works out the index by referring to a pixel value in the local decoded image which pixel value is observed in the neighboring region.

The pixel value in the local decoded image which pixel value is observed in the neighboring region is information which is available while the moving image encoding device is encoding the encoding target block. Furthermore, the pixel value in the local decoded image which pixel value is observed in the neighboring region is information which is also available while the moving image decoding device is decoding the encoding target block. Therefore, the above configuration allows the moving image decoding device to select the same correction means as that selected by the moving image encoding device, without adding, to the encoded data generated by the moving image encoding device, any new information indicative of the correction means which was selected by the moving image encoding device.

Note that the index can be, for example, a numerical value indicative of (i) a continuity of pixel values in the local decoded image which continuity is observed in the region adjacent to the upper side of the encoding target block and (ii) a continuity of pixel values in the local decoded image which continuity is observed in the region adjacent to the left side of the encoding target block.

In the moving image encoding device of the present invention, it is preferable that the calculation means works out the index by referring to a change in pixel value in the local decoded image which change is observed in the neighboring region.

The change in pixel value in the local decoded image which change is observed in the neighboring region is information which is available while the moving image encoding device is encoding the encoding target block. Furthermore, the change in pixel value in the local decoded image which change is observed in the neighboring region is information which is also available while the moving image decoding device is decoding the encoding target block. Therefore, the above configuration allows the moving image decoding device to select the same correction means as that selected by the moving image encoding device, without adding, to the encoded data generated by the moving image encoding device, any new information indicative of the correction means which was selected by the moving image encoding device.

Note that the index can be, for example, a numerical value indicative of (i) a degree of a change in pixel value in the local decoded image which degree is observed in the region adjacent to the upper side of the encoding target block and (ii) a degree of a change in pixel value in the local decoded image which degree is observed in the region adjacent to the left side of the encoding target block

In the moving image encoding device of the present invention, it is preferable that the calculation means works out the index by referring to (i) a motion vector for the encoding target block and (ii) a motion vector for an encoded block adjacent to the encoding target block.

The motion vector for the encoding target block and the motion vector for the encoded block adjacent to the encoding target block are information which is available while the moving image encoding device is encoding the encoding target block. Furthermore, the motion vector for the encoding target block and the motion vector for the encoded block adjacent to the encoding target block are information which is also available while the moving image decoding device is decoding the encoding target block. Therefore, the above configuration allows the moving image decoding device to select the same correction means as that selected by the moving image encoding device, without adding, to the encoded data generated by the moving image encoding device, any new information indicative of the correction means which was selected by the moving image encoding device.

Note that the index can be, for example, a numerical value indicative of (a) a similarity between (i) the motion vector for the encoding target block and (ii) a motion vector for an encoded block adjacent to the upper side of the encoding target block and (b) a similarity between (i) the motion vector for the encoding target block and (ii) a motion vector for an encoded block adjacent to the left side of the encoding target block.

In order to solve the foregoing problems, a moving image decoding device of the present invention is a moving image decoding device for decoding encoded data obtained by encoding, for each block, a difference between an input image and a predicted image, including: calculation means for working out an index indicative of a correlation between (i) a change in pixel value in the input image between frames which change is observed in a decoding target block and (ii) a change in pixel value in a local decoded image between the frames which change is observed in a neighboring region being adjacent to the decoding target block; a plurality of correction means each for correcting a motion-compensated image based on a change in pixel value in the local decoded image between the frames which change is observed in a respective one of mutually different regions included in the neighboring region; and selection means for selecting one of the plurality of correction means based on the index, so that the motion-compensated image corrected by the selected correction means is used as the predicted image, in order to reproduce the input image.

According to the above configuration, it is possible to provide a moving image decoding device capable of decoding encoded data that the moving image encoding device has been encoded.

Advantageous Effects of Invention

As described above, a moving image encoding device of the present invention selects, based on a correlation between (i) a change in pixel value in an encoding target block and (ii) a change in pixel value in a neighboring region adjacent to the encoding target block, the one using a most suitable correction method from among a plurality of motion-compensated image correcting sections, so as to correct a motion-compensated image.

This enables correction by a method more suitable for the local characteristics of the moving image, as compared with a case where the correction is performed always by a single correction method. Namely, this provides an effect of increasing accuracy in the correction. Therefore, this can reduce an amount of encoded data necessary to encode prediction residuals.

Brief Description of Drawings

Fig. 1

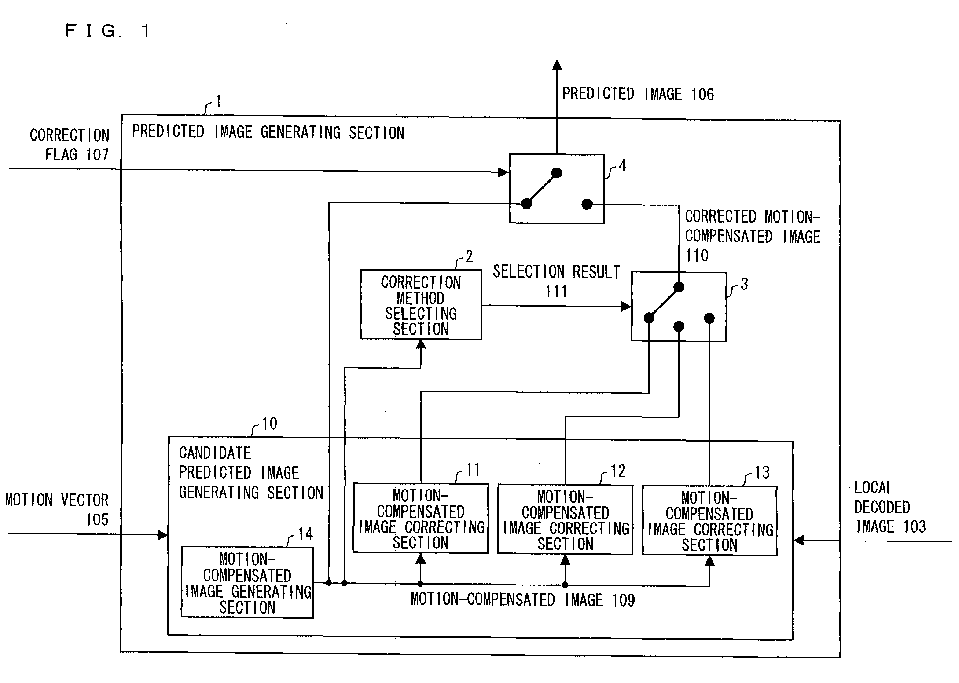

Fig. 1 is a view illustrating (i) a configuration of a main part of a predicted image generating section according to one embodiment of the present invention and (ii) a flow of data transmitted between sections included in the predicted image generating section.
Fig. 2

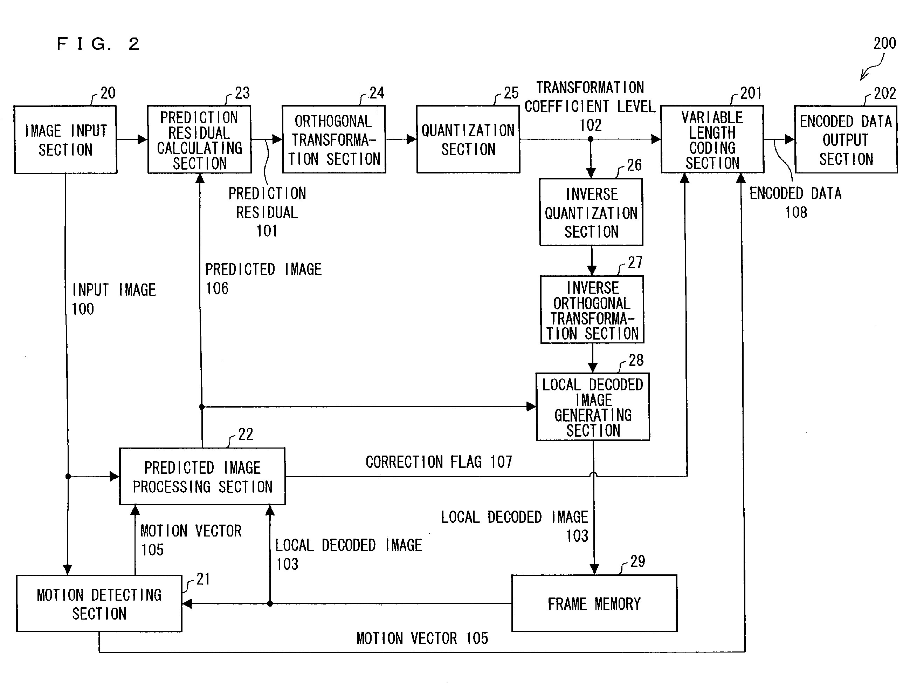

Fig. 2 is a block diagram illustrating (i) a configuration of a main part of a moving image encoding device according to the one embodiment of the present invention and (ii) a flow of data transmitted between sections included in the moving image encoding device.
Fig. 3

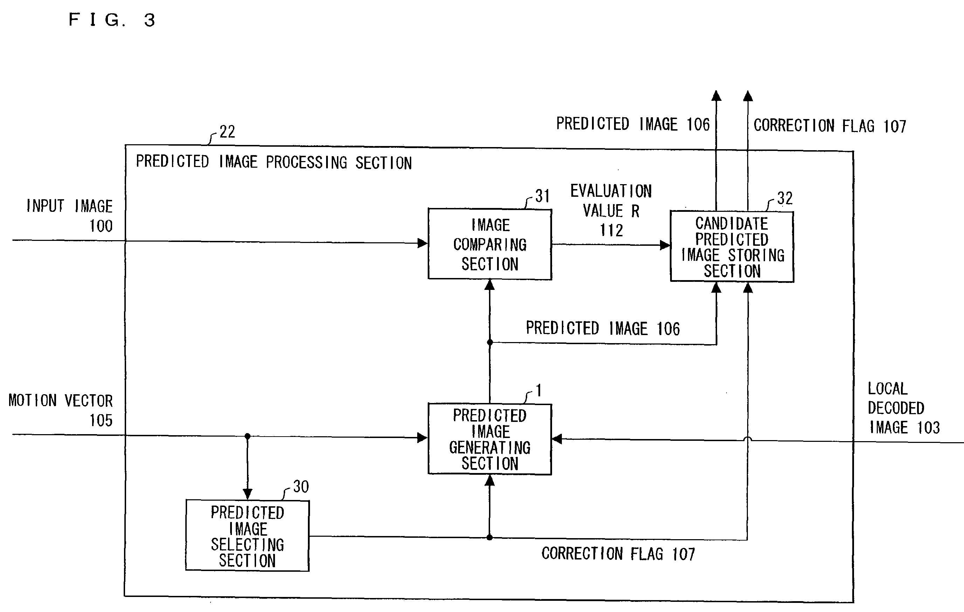

Fig. 3 is a block diagram illustrating (i) a configuration of a main part of a predicted image processing section according to the one embodiment of the present invention and (ii) a flow of data transmitted between sections included in the predicted image processing section.
Fig. 4

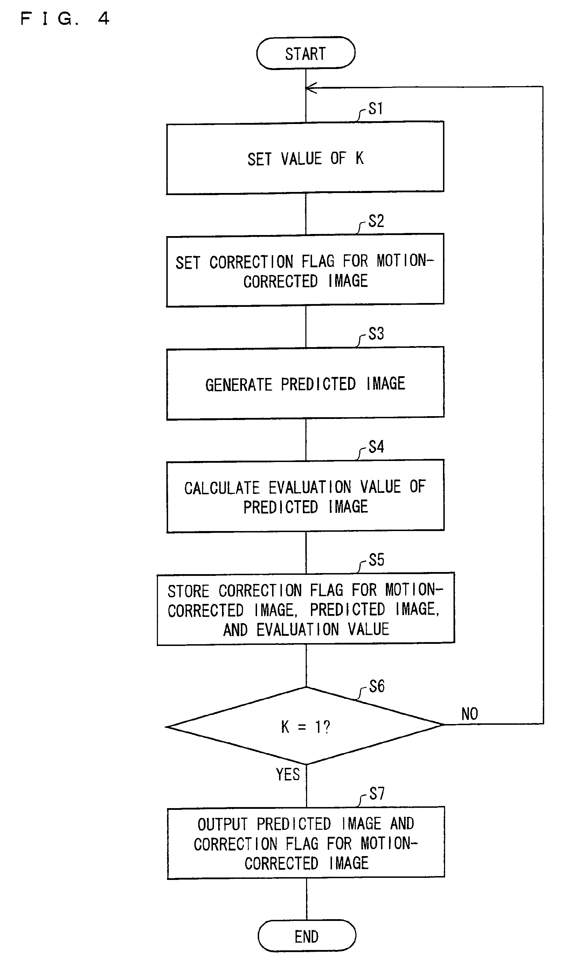

Fig. 4 is a flow chart of a process performed by the predicted image processing section according to the one embodiment of the present invention.
Fig. 5

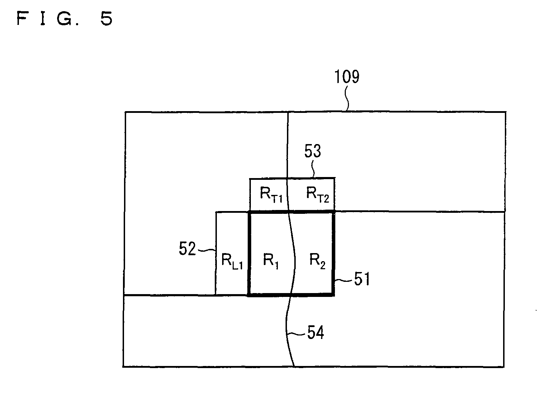

Fig. 5 is a view illustrating an example where an encoding target block includes an edge.
Fig. 6

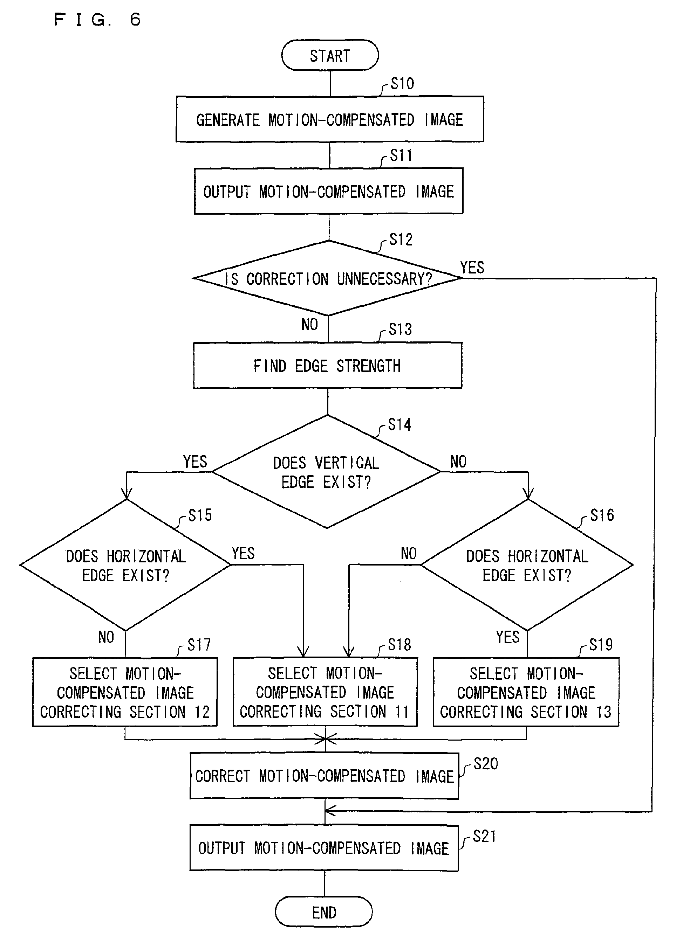

Fig. 6 is a flow chart of a process performed by the predicted image generating section according to the one embodiment of the present invention.
Fig. 7

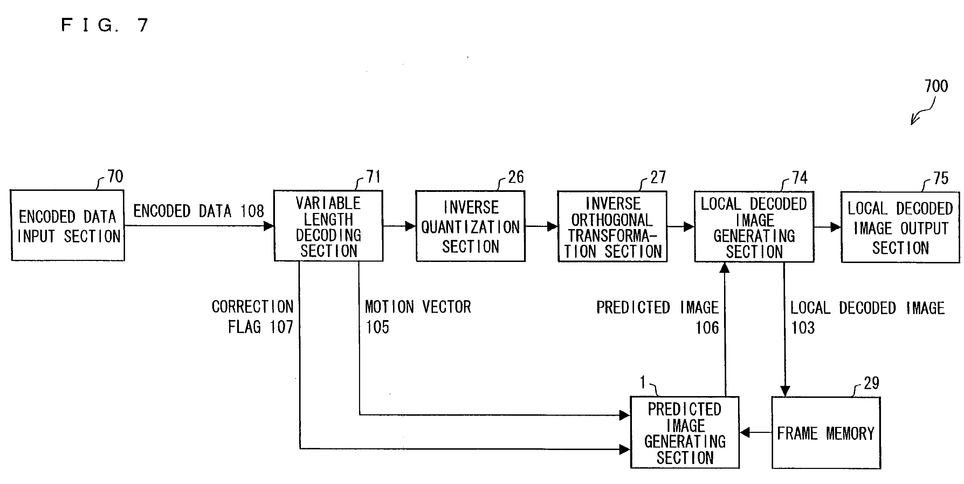

Fig. 7 is a view illustrating (i) a configuration of a main part of a moving image decoding device according to the one embodiment of the present invention and (ii) a flow of data transmitted between sections included in the moving image decoding device.
Fig. 8

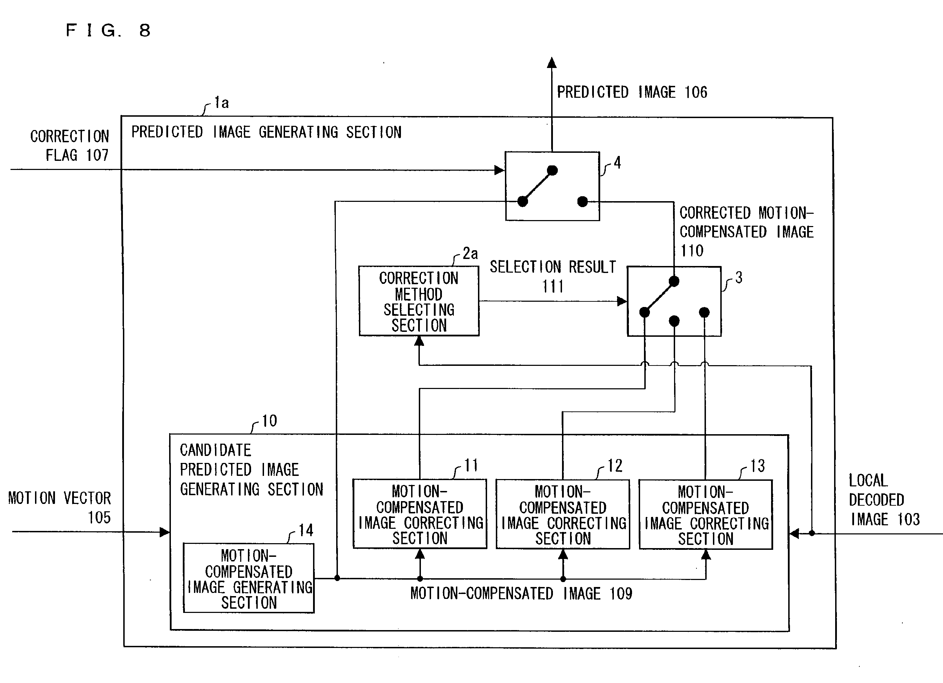

Fig. 8 is a block diagram illustrating (i) a configuration of a main part of a predicted image generating section according to another embodiment of the present invention and (ii) a flow of data transmitted between sections included in the predicted image generating section.

Fig. 9

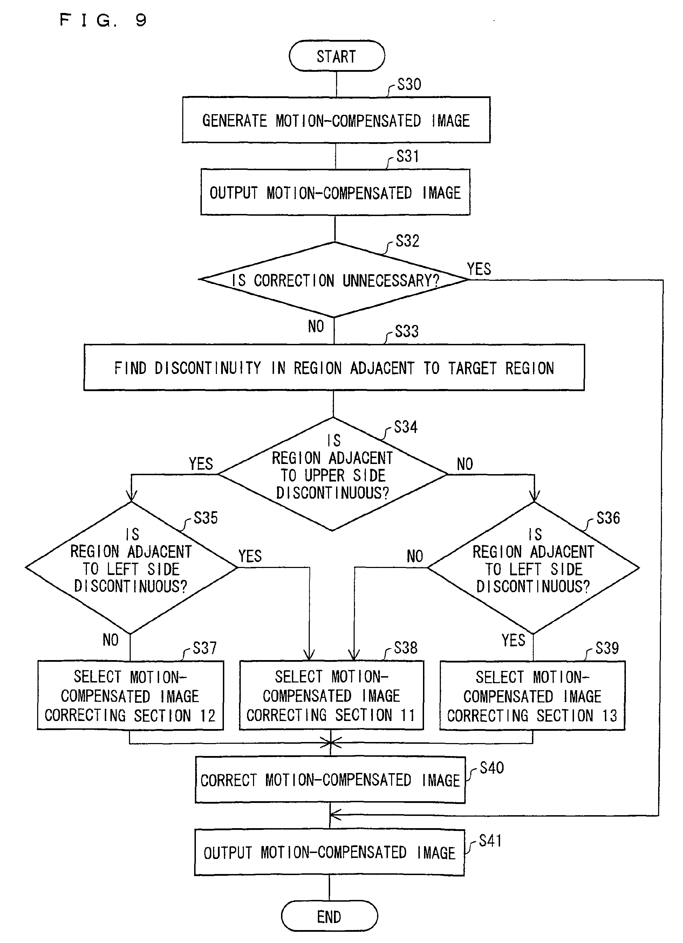

Fig. 9 is a flow chart of a process performed by the predicted image generating section according to said another embodiment of the present invention.

Fig. 10

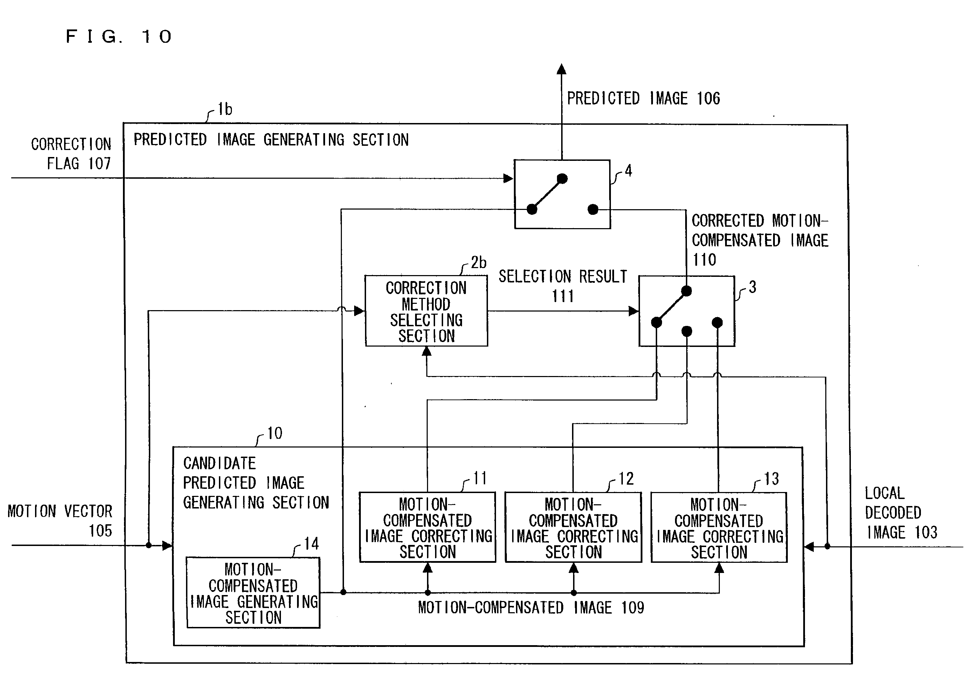

Fig. 10 is a block diagram illustrating (i) a configuration of a main part of a predicted image generating section according to further another embodiment of the present invention and (ii) a flow of data transmitted between sections included in the predicted image generating section.

Fig. 11

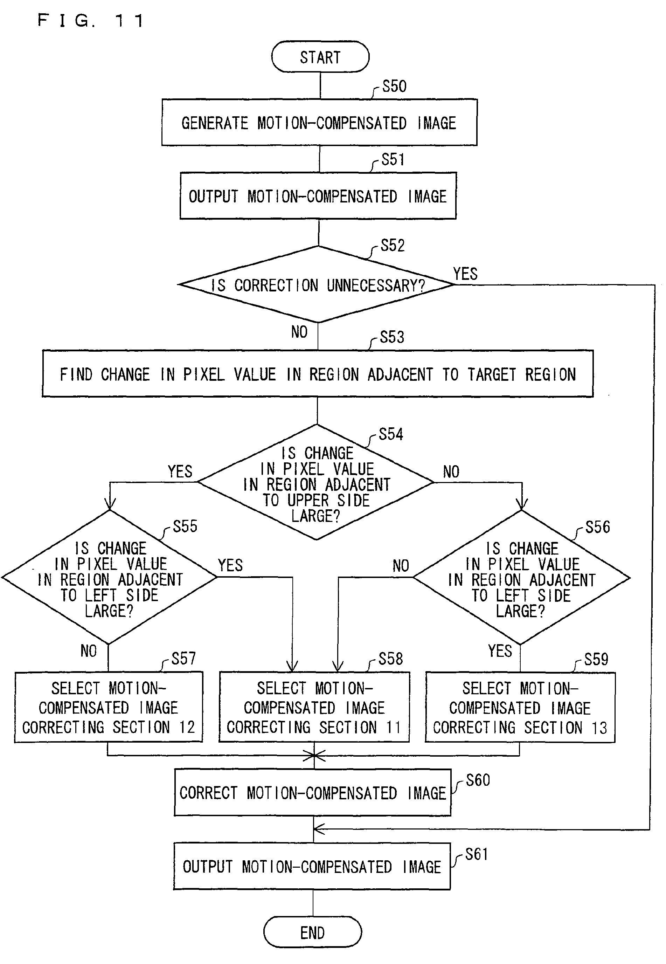

Fig. 11 is a flow chart of a process performed by the predicted image generating section according to said further another embodiment of the present invention.

Fig. 12

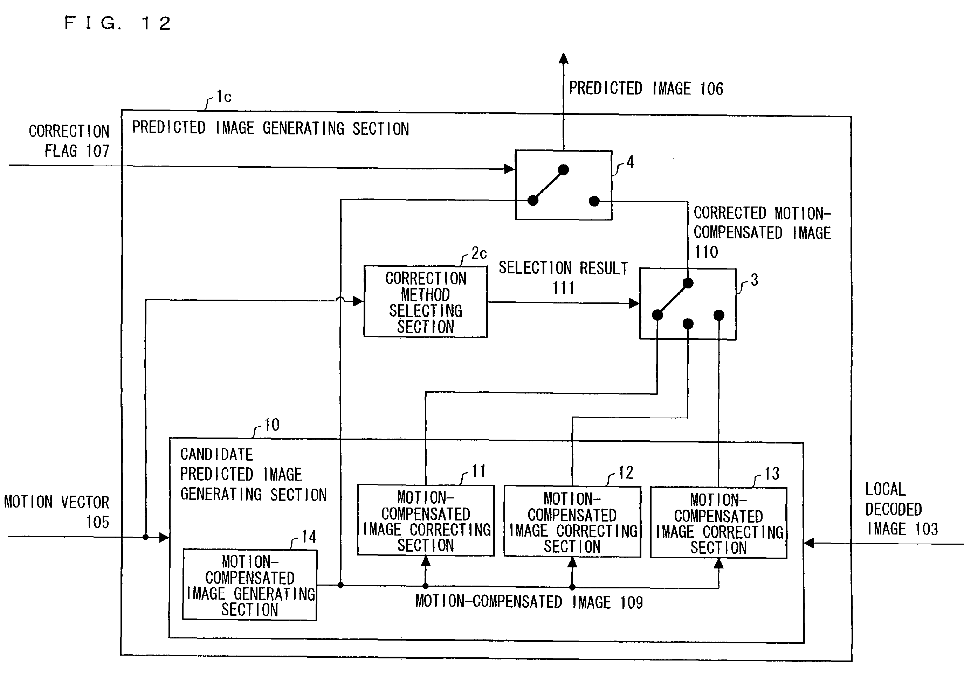

Fig. 12 is a block diagram illustrating (i) a configuration of a main part of a predicted image generating section according to still further another embodiment of the present invention and (ii) a flow of data transmitted between sections included in the predicted image generating section.

Fig. 13

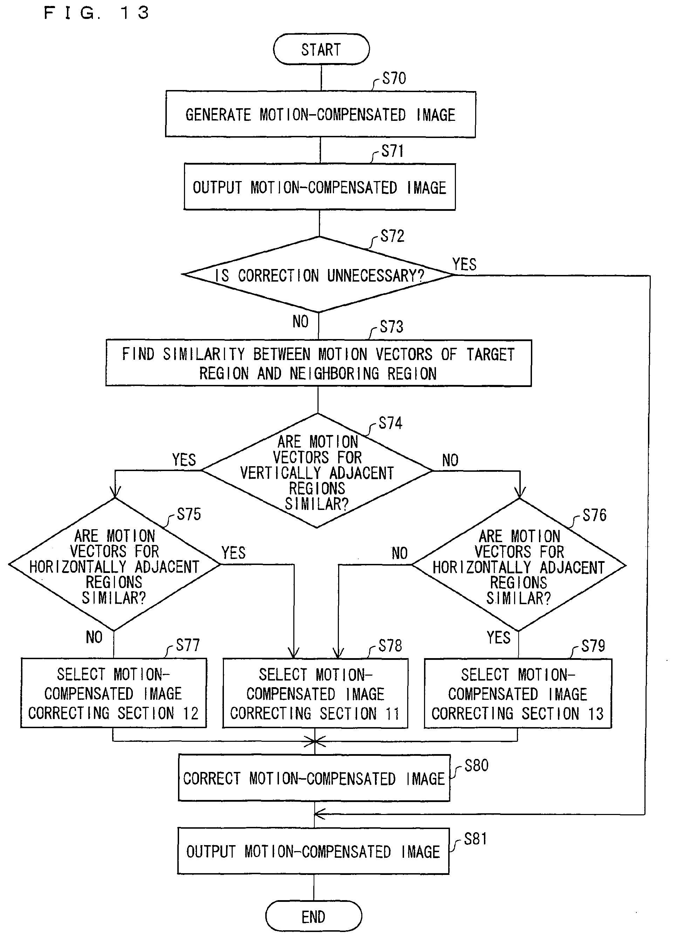

Fig. 13 is a flow chart of a process performed by the predicted image generating section according to said still further another embodiment of the present invention.

Fig. 14

Fig. 14 is a view illustrating a target image observed at a certain time point.

Fig. 15

Fig. 15 is a view illustrating (i) a reference image observed at a certain time point and (ii) a target image observed at the certain time point.

Description of Embodiments

[Embodiment 1]

The following will describe, with reference to Figs. 1 through 7, a moving image encoding device and a moving image decoding device according to Embodiment 1 of the present invention.

(Configuration of Moving Image Encoding Device)

First, the following will describe, with reference to Fig. 2, a configuration of a main part of a moving image encoding device 200 of the present embodiment.

Fig. 2 is a block diagram illustrating (i) a configuration of a main part of the moving image encoding device 200 and (ii) a flow of data transmitted between sections included in the moving image encoding device 200. As shown in Fig. 2, the moving image encoding device 200 (moving image encoding device) includes an image input section 20, a motion detecting section 21, a predicted image processing section 22, a prediction residual calculating section 23, an orthogonal transformation section 24, a quantization section 25, an inverse quantization section 26, an inverse orthogonal transformation section 27, a local decoded image generating section 28, a frame memory 29, a variable length coding section 201, and an encoded data output section 202. A process performed by each of these sections will be described in detail later.

(Configuration of Predicted Image Processing Section 22)

The following will describe a configuration of the predicted image processing section 22 with reference to Fig. 3. Fig. 3 is a block diagram illustrating (i) a configuration of a main part of the predicted image processing section 22 and (ii) a flow of data transmitted between sections included in the predicted image processing section 22. As shown in Fig. 3, the predicted image processing section 22 includes a predicted image generating section 1, a predicted image selecting section 30, an image comparing section 31, and a candidate predicted image storing section 32. A process performed by each of these sections will be described in detail later.

(Configuration of Predicted Image Generating Section 1)

The following will describe a configuration of the predicted image generating section 1 with reference to Fig.

1. Fig. 1 is a block diagram illustrating (i) a configuration of a main part of the predicted image generating section 1 and (ii) a flow of data transmitted between sections included in the predicted image generating section 1. As shown in Fig. 1, the predicted image generating section 1 includes a candidate predicted image generating section 10, a correction method selecting section 2 (calculation means, selection means), a switch 3, and a switch 4. The candidate predicted image generating section 10 includes a motion-compensated image correcting section 11 (correction means), a motion-compensated image correcting section 12 (correction means), and a motion-compensated image correcting section 13 (correction means). A process performed by each of these sections will be described in detail later.

Mathematical formulas in the descriptions below will be expressed as follows. "Ic(X, Y)" denotes a pixel value of a pixel located at a position (X, Y) in a locally-decoded target image (i.e., a local decoded image of a target frame) Ic, where a pixel located at an upper left corner of the locally-decoded target image Ic is an origin. Similarly, "Ir(X, Y)" denotes a pixel value of a pixel located at a position (X, Y) in a locally-decoded reference image (i.e., a local decoded image of a reference frame) Ir. Unless otherwise stated, the "pixel value" herein means a luminance value of its corresponding pixel. However, the method described in the present embodiment is also effective in a case where the "pixel value" expresses a color difference. Further, the method described in the present embodiment is also effective in a case where the "pixel value" expresses other physical quantity such as (i) a distance to an object to be captured or (ii) an amount of heat of the object to be captured.

(Process Performed by Moving Image Encoding Device)

A process performed by the moving image encoding device will be first described with reference to Fig. 2.

First, the image input section 20 inputs an input image 100 to the motion detecting section 21, the predicted image processing section 22, and the prediction residual calculating section 23. The input image 100 refers to an encoding target image, which is to be encoded, such as the one shown in Fig. 14. Since Fig. 14 has been already described, detailed explanation thereof is omitted here.

Next, the motion detecting section 21 obtains a local decoded image 103 from the frame memory 29, and compares pixel values in the input image 100 and pixel values in the local decoded image 103. Based on this, the motion detecting section 21 obtains a motion vector 105, and outputs the motion vector 105 to the predicted image processing section 22 and the variable length coding section 201.

The local decoded image 103 will be described in detail later.

The predicted image processing section 22 generates a motion-compensated image based on the motion vector 105. Further, the predicted image processing section 22 corrects the motion-compensated image based on a change in pixel value of a pixel in an encoding target region-neighboring region of the local decoded image 103, so as to generate an image. Then, of the uncorrected motion-compensated image and the corrected motion-compensated image, the one which approximates to the input image 100 more closely is outputted from the predicted image processing section 22 to the prediction residual calculating section 23 as a predicted image 106. Furthermore, the predicted image processing section 22 also outputs a correction flag 107 to the variable length coding section 201. The correction flag 107 indicates whether or not the predicted image 106 is the one generated by correcting the motion-compensated image (i.e., whether or not the correction has been made). A process performed in the predicted image processing section 22 will be described in detail later.

The prediction residual calculating section 23 works out a difference in pixel value between the input image 100 and the predicted image 106, so as to generate prediction residuals 101 (L × M pixels). Then, the prediction residual calculating section 23 outputs the generated prediction residuals 101 to the orthogonal transformation section 24. The encoding of the input image 100 is performed block by block in a predetermined order, as shown in Fig. 14. Each block of the input image 100 has a size of L × M pixels. Similarly, the predicted image 106 has a size of L × M pixels.

The orthogonal transformation section 24 executes a discrete cosine transform, so as to obtain frequency component coefficients, which correspond to frequencies converted from the inputted prediction residuals 101. Then, the orthogonal transformation section 24 outputs the frequency component coefficients to the quantization section 25.

The quantization section 25 quantizes the frequency component coefficients by a predetermined quantization step, so as to obtain transformation coefficient levels 102. Then, the quantization section 25 outputs the transformation coefficient levels 102 to the variable length coding section 201 and the inverse quantization section 26.

The inverse quantization section 26 inverse-quantizes the transformation coefficient levels 102, so as to restore them to frequency transformation coefficients. Then, the inverse quantization section 26 outputs the restored frequency transformation coefficients to the inverse orthogonal transformation section 27.

The inverse orthogonal transformation section 27 applies an inverse discrete cosine transform to the frequency transformation coefficients, so as to restructure the prediction residuals 101 (L × M pixels). Then, the inverse orthogonal transformation section 27 outputs the restructured prediction residuals 101 to the local decoded image generating section 28.

The local decoded image generating section 28 adds the restructured prediction residuals 101 to the predicted image 106, so as to generate the local decoded image 103 (L × M pixels). Subsequently, the local decoded image generating section 28 causes the local decoded image 103 to be stored in the frame memory 29.

The local decoded image generating section 28 causes local decoded images 103 prepared for the respective blocks to be sequentially stored in the frame memory 29. Therefore, while the moving image encoding device 200 is performing the encoding process, the frame memory 29 stores (i) all of the local decoded images of the reference frame and (ii) part (encoded region) of the local decoded images of the target frame.

The variable length coding section 201 encodes and multiplexes the transformation coefficient levels 102, the motion vector 105, and the correction flag 107, each of which has been inputted thereto. Thereafter, the variable length coding section 201 outputs the multiplexed data to the encoded data output section 202 as encoded data 108.

The encoded data output section 202 outputs the encoded data 108 to a moving image decoding device of the present invention (details thereof will be described later), if necessary.

(Process Performed by Predicted Image Processing Section 22)

Here, with reference to Figs. 3 and 4, the following will describe a flow of the whole of a process performed by the predicted image processing section 22. Fig. 4 is a flow chart of the process performed by the predicted image processing section 22.

As shown in Fig. 3, in response to the motion vector 105 inputted thereto, the predicted image selecting section 30 sets a value of a variable K to 0, the value of the variable K being retained in order to set the correction flag 107. If the value of the variable K has been already set to 0, the predicted image selecting section 30 sets the value of the variable K to 1 (Step S1). Note that, if another motion vector 105 is inputted to the predicted image selecting section 30, the variable K is initialized and is brought to an unsetting state.

Next, based on the value of the variable K which is set in Step S1, the predicted image selecting section 30 sets a value of the correction flag 107. Specifically, if the value of the variable K is 0, the predicted image selecting section 30 sets the correction flag 107 to "without correction". On the other hand, if the value of the variable K is 1, the predicted image selecting section 30 sets the correction flag 107 to "with correction". Every time when the predicted image selecting section 30 changes the value of the correction flag 107, the predicted image selecting section 30 outputs the correction flag 107 to the predicted image generating section 1 and the candidate predicted image storing section 32 (Step S2). Namely, if the predicted image selecting section 30 sets the correction flag 107 to "without correction", the predicted image selecting section 30 outputs the correction flag 107 which has been set to "without correction" to the predicted image generating section 1 and the candidate predicted image storing section 32. Similarly, if the predicted image selecting section 30 sets the correction flag 107 to "with correction", the predicted image selecting section 30 outputs the correction flag 107 which has been set to "with correction" to the predicted image generating section 1 and the candidate predicted image storing section 32.

Subsequently, the predicted image generating section 1 generates the predicted image 106 based on the motion vector 105, the local decoded image 103, and the correction flag 107 (Step S3). Then, the predicted image generating section 1 outputs the predicted image 106 to the image comparing section 31 and the candidate predicted image storing section 32. Note that a process performed in the predicted image generating section 1 will be described in detail later.

Next, the image comparing section 31 compares (i) the predicted image 106 (L × M pixels) generated in Step S3 and (ii) the input image 100 (L × M pixels), so as to work out an evaluation value R 112. Then, the image comparing section 31 outputs the evaluation value R 112 to the candidate predicted image storing section 32 (Step S4).

The evaluation value R 112 is a sum of absolute values of differences, and indicates how much the predicted image 106 approximates to the input image 100. The evaluation value R 112 can be obtained by the following formula (Formula 1):

$$R = \sum_{j=0}^{j<M} \sum_{i=0}^{i<L} \left| O(i,j) - P(i,j) \right| \quad \cdots \text{ (Formula 1)}$$

In this formula, "O(i, j)" denotes a pixel value of a pixel located at a position (i, j) in a block of the input image 100, whereas "P(i, j)" denotes a pixel value of a pixel located at a position (i, j) in a block of the predicted image 106. Note that, the smaller the evaluation value R 112 obtained by Formula 1 is, the more closely the predicted image 106 approximates to the input image 100.

Subsequently, the candidate predicted image storing section 32 causes the correction flag 107 received in Step S2, the predicted image 106 received in Step S3, and the evaluation value R 112 received in Step S4 to be stored in another memory (not illustrated) which is included in the moving image encoding device 200 and is not the frame memory, in such a manner that the correction flag 107, the predicted image 106, and the evaluation value R 112 are associated with each other (Step S5).

Next, the predicted image selecting section 30 determines whether or not the value of the variable K is 1 (Step S6).

If NO in Step S6, the process returns to Step S1. NO in Step S6 means that (i) the value of the variable K is 0 and (ii) the correction flag is set to "without correction". Namely, at this point, the predicted image 106 is the one generated by the process for "without correction". As a result of returning to Step S1, the value of K is set to 1. Therefore, for this time, the predicted image 106 is generated by the process for "with correction".

If YES in Step S6, the candidate predicted image storing section 32 selects, from among the predicted images 106 generated in Step S2, a predicted image 106 associated with a smallest evaluation value R 112. Further, the candidate predicted image storing section 32 outputs, to the prediction residual calculating section 23 and the local decoded image generating section 28 included in the moving image encoding device 200 shown in Fig. 2, the selected predicted image 106 and the correction flag 107 which is associated with the selected predicted image 106. Furthermore, the candidate predicted image storing section 32 outputs the correction flag 107 to the variable length coding section 201, which is shown in Fig. 2. (Step S7)

According to the above process, the predicted image processing section 22 selects, out of (i) the predicted image 106 generated without correcting the motion-compensated image and (ii) the predicted image 106 generated by correcting the motion-compensated image, the predicted image 106 which approximates to the input image 100 more closely. Consequently, the difference in pixel value between the predicted image 106 and the input image 100 is made even smaller. Namely, it is possible to make the prediction residuals 101 even smaller.

(Process Performed by Predicted Image Generating Section 1)

With reference to Figs. 1 and 6, the following will describe a process performed by the predicted image generating section 1, which is an element characteristic to the moving image encoding device 200.

The predicted image generating section 1 is generation means for generating the predicted image 106 based on the motion-compensated image corrected by the motion-compensated image correcting section which is selected by the correction method selecting section 2 from among a plurality of motion-compensated image correcting sections. A process performed by the predicted image generating section 1 will be described in detail below:

Fig. 6 is a flow chart of the process performed by the predicted image generating section 1.

As shown in Fig. 1, first, a motion-compensated image generating section 14 in the candidate predicted image generating section 10 is supplied with the local decoded image 103 and the motion vector 105. Based on the local decoded image 103 and the motion vector 105 thus supplied, the motion-compensated image generating section 14 generates a motion-compensated image 109 (L × M pixels) (Step S10). The motion-compensated image generating section 14 outputs the generated motion-compensated image 109 (L × M pixels) to the switch 4, the correction method selecting section 2, and the motion-compensated image correcting sections 11 through 13 (Step S11).

A pixel value M(i, j) of a pixel included in the motion-compensated image 109 is worked out by the following formula (Formula 2):

$$M(i, j) = Ir(x_c + i + dX, y_c + j + dY) \quad \cdots \quad (Formula\ 2)$$

In the above formula, $(x_c, y_c)$ denotes a position in the target image at which position a pixel at an upper left corner of the target block is located. Further, in the above formula, $(dX, dY)$ denotes a displacement (in units of pixels) represented by the motion vector 105.

The switch 4 is supplied with the correction flag 107 outputted by the predicted image selecting section 30, which is shown in Fig. 3. According to the correction flag 107 thus supplied, the switch 4 determines whether or not a correction is unnecessary for the motion-compensated image 109 (Step S12). If the correction flag 107 indicates "without correction" and the switch 4 determines that the correction is unnecessary, the switch 4 outputs, to the image comparing section 31 and the candidate predicted image storing section 32 included in the predicted image processing section 22 shown in Fig. 3, the motion-compensated image 109 as the predicted image 106 (Step S21).

On the other hand, if the correction flag 107 indicates "with correction" and the switch 4 determines that the correction is necessary, the predicted image generating section 1 executes the following steps:

First, the correction method selecting section 2 refers to an encoded region of the motion-compensated image 109 so as to work out an index representing a correlation between (i) a change in pixel value in the input image 100 between frames which change is observed in an encoding target block and (ii) a change in pixel value in the local decoded image 103 between the frames which change is observed in a neighboring region adjacent to the encoding target block. Specifically, the correction method selecting section 2 works out an index representing a correlation between (i) a change in pixel value in the motion-compensated image 109 which change is observed in an encoding target block and (ii) a change in pixel value in the motion-compensated image 109 which change is observed in a neighboring region adjacent to the encoding target block. Then, based on the index thus worked out, the correction method selecting section 2 selects one from among the plurality of correction means. Namely, the correction method selecting section 2 selects, out of the motion-compensated image correcting sections 11 through 13, a correcting section which is to be used to perform the correction.

The correction method selecting section 2 works out, in the encoding target block, an edge strength of the motion-compensated image 109 (Step S13). Then, based on the edge strength thus worked out, the correction method selecting section 2 selects a motion-compensated image correcting section which performs a most suitable correction (Steps S17 through S19). Steps S17 through S19 will be described in detail later. The edge strength herein refers to a probability level indicating which of a vertical edge and a horizontal edge is more likely to exist in the motion-compensated image 109.

(Example of Edge)

Here, the following will describe the edge with reference to Fig. 5. Fig. 5 is a view illustrating an example of a motion-compensated image 109 including an encoding target block 51 in which an edge 54 exists.

As shown in Fig. 5, the encoding target block 51 is divided by the edge 54 into a region $R_1$ and a region $R_2$, which are arranged from the left in order. The edge 54 serves as a boundary at which pixel values change discontinuously. In the following description, in a case where (i) the encoding target block 51 has a boundary extending from an upper side of the encoding target block 51 to a lower side the encoding target block 51 and (ii) pixel values change discontinuously at the boundary as above, this boundary is called a "vertical edge". Further, such the condition is described as having an edge in a vertical direction.

On the other hand, in a case where (i) the encoding target block 51 has a boundary extending from a left side of the encoding target block 51 to a right side the encoding target block 51 and (ii) pixel values change discontinuously at the boundary, this boundary is called a "horizontal edge". Further, such the condition is described as having an edge in a horizontal direction.

The following will describe a correlation between (i) a direction of an edge and (ii) a change in pixel value observed in the encoding target block 51.

As shown in Fig. 5, the edge 54 extends to and reaches an upper side of a region 53, which is adjacent to the upper side of the encoding target block 51. Accordingly, also in the region 53, which is adjacent to the encoding target block 51, pixel values change discontinuously at the edge 54. Thus, the region 53 is divided into a region $R_{T1}$ and a region $R_{T2}$, which are arranged from the left in order. On the other hand, a region 52 (i.e., a region $R_{L1}$), which is adjacent to the left side of the encoding target block 51, has no edge. Accordingly, pixel values in the region 52 do not change discontinuously.

In this case, (i) a correlation between the region $R_1$ and the region $R_{L1}$, (ii) a correlation between the region $R_1$ and the region $R_{T1}$, and (iii) a correlation between the region $R_2$ and the region $R_{T2}$ are high.

(Correlation between Pixel Values)

Referring to a region having a higher correlation with the pixel value in the encoding target block provides a better prediction result. Therefore, in order to predict a change in pixel value in the region $R_1$, it is desirable to refer to the region $R_{T1}$, which has a high correlation with the region $R_1$. Meanwhile, in order to predict a change in pixel value in the region $R_2$, it is desirable to refer to the region $R_{T2}$, which has a high correlation with the region $R_2$.

Namely, in a case where an encoding target block has a vertical edge, a pixel value in the encoding target block may be predicted by referring to a pixel in a region adjacent to an upper side of the encoding target block, which region has a high correlation with a pixel in the encoding target block. On the other hand, in a case where an encoding target block has a horizontal edge, a pixel value in the encoding target block may be predicted by referring to a pixel in a region adjacent to a left side of the encoding target block, which region has a high correlation with a pixel in the encoding target block.

(Detection of Edge)

Next, the following will describe how the correction method selecting section 2 determines the presence or absence of an edge, with reference to the following formulae (Formulae 3 and 4):

$$E_V = \sum_{i=0}^{i<L} \sum_{j=0}^{j<M} \left| \sum_{k=0}^{k<3} \sum_{l=0}^{l<3} a_{k,l} \cdot M(i+k-1, j+l-1) \right| \qquad \text{where} \quad \{a_{k,l}\} = \begin{pmatrix} -1 & 0 & 1 \\ -1 & 0 & 1 \\ -1 & 0 & 1 \end{pmatrix}$$

$$\cdots \text{(Formula 3)}$$

$$E_H = \sum_{i=0}^{i<L} \sum_{j=0}^{j<M} \left| \sum_{k=0}^{k<3} \sum_{l=0}^{l<3} b_{k,l} \cdot M(i+k-1, j+l-1) \right| \qquad \text{where} \quad \{b_{k,l}\} = \begin{pmatrix} -1 & -1 & -1 \\ 0 & 0 & 0 \\ 1 & 1 & 1 \end{pmatrix}$$

$$\cdots \text{(Formula 4)}$$

Formula 3 is for working out a vertical edge strength EV in the motion-compensated image 109, whereas Formula 4 is for working out a horizontal edge strength EH in the motion-compensated image 109.

If a vertical edge strength EV, worked out according to Formula 3, is greater than a predetermined threshold value, the correction method selecting section 2 determines that the encoding target block has a vertical edge. On the other hand, if the vertical edge strength EV is equal to or smaller than the predetermined threshold value, the correction method selecting section 2 determines that the encoding target block has no vertical edge.

Similarly, if a horizontal edge strength EH, worked out according to Formula 4, is greater than a predetermined threshold value, the correction method selecting section 2 determines that the encoding target block has a horizontal edge. On the other hand, if the horizontal edge strength EH is equal to or smaller than the predetermined threshold value, the correction method selecting section 2 determines that the encoding target block has no horizontal edge.

Next, the following will describe the motion-compensated image correcting sections 11 through 13, which respectively correspond to a plurality of correction means each for correcting the motion-compensated image 109. The motion-compensated image correcting sections 11 through 13 are the correction means referring to respective different regions in order to correct the motion-compensated image 109. The following will describe details of each of the motion-compensated image correcting sections 11 through 13.

(Motion-Compensated Image Correcting Section 11)

First, the motion-compensated image correcting section 11 will be described. The motion-compensated image correcting section 11 corrects the motion-compensated image 109 based on the local decoded image 103, the motion vector 105, and the motion-compensated image 109.

Specifically, the motion-compensated image correcting section 11 corrects the motion-compensated image 109 based on (i) a change in pixel value between frames which change is observed in a pixel adjacent to the upper side of the encoding target block and (ii) a change in pixel value between the frames which change is observed in a pixel adjacent to the left side of the encoding target block. A pixel value Ma(i, j) of an image which has been corrected is worked out by the following formulae (Formulae 5 and 6):

$$Ma(i, j) = M(i, j) + \Delta Ma(i, j) \qquad (i = 0...L-1, \ j = 0...M-1)$$

$$\cdots \text{(Formula 5)}$$

$$\Delta M_a(i, j) = W_{i,j} \times \Delta S_T(i,0) + (1 - W_{i,j}) \times \Delta S_L(0, j) \quad (i = 0...L-1, \ j = 0...M-1)$$

$$\text{where} \quad W_{i,j} = \frac{i+1}{i+j+2}$$

$$\cdots \text{(Formula 6)}$$

In the above formula, "ΔST(i, 0)" denotes the change in pixel value between the frames which change is observed in the pixel adjacent to the upper side of the encoding target block, whereas "ΔSL(0, j)" denotes the change in pixel value between the frames which change is observed in the pixel adjacent to the left side of the encoding target block. The "ΔST(i, 0)" and the "ΔSL(0, j)" are defined by the following formulae (Formulae 7 and 8), respectively:

$$\Delta S_T(i,0) = I_c(x_c + i, y_c - 1) - I_r(x_c + dX + i, y_c + dY - 1) \quad (i = 0...L-1)$$

$$\cdots \text{(Formula 7)}$$

$$\Delta S_L(0,j) = I_c(x_c - 1, y_c + j) - I_r(x_c + dX - 1, y_c + dY + j) \quad (j = 0...M-1)$$

$$\cdots \text{(Formula 8)}$$

An image having a pixel value represented by "Ma(i, j)" which is worked out by the above Formula 5 corresponds to an image obtained by correcting the motion-compensated image 109 based on the change in pixel value of the pixel adjacent to the upper or left side of the encoding target block. The motion-compensated image correcting section 11 outputs the corrected image to the switch 3.

(Motion-Compensated Image Correcting Section 12)

Next, the following will describe the motion-compensated image correcting section 12.
First, the motion-compensated image correcting section 12 is supplied with the same data as those supplied to the motion-compensated image correcting section 11. However, the motion-compensated image correcting section 12 corrects the motion-compensated image 109 with use of different formulae from those used by the motion-compensated image correcting section 11.
Specifically, the motion-compensated image correcting section 12 corrects the motion-compensated image 109 based on only the change in pixel value of the pixel adjacent to the upper side of the encoding target block. A pixel value Mb(i, j) of an image which has been corrected is worked out by the following formulae (Formulae 9 and 10):

$$Mb(i, j) = M(i, j) + \Delta Mb(i, j) \quad (i = 0...L-1, \ j = 0...M-1)$$

$$\cdots \text{(Formula 9)}$$

$$\Delta \mathrm{Mb}(i,j) = \Delta \mathrm{S_T}(i,0) \quad (i = 0...L-1, \ j = 0...M-1)$$

$$\cdots (\mathrm{Formula} \ 10)$$

An image having a pixel value represented by "Mb(i, j)" which is worked out by the above Formula 9 corresponds to an image obtained by correcting the motion-compensated image based on the change in pixel value of the pixel adjacent to the upper side of the encoding target block. The motion-compensated image correcting section 12 outputs the corrected image to the switch 3.

(Motion-Compensated Image Correcting Section 13)

Next, the following will describe the motion-compensated image correcting section 13. The motion-compensated image correcting section 13 is supplied with the same data as those supplied to the motion-compensated image correcting sections 11 and 12. However, the motion-compensated image correcting section 13 corrects the motion-compensated image 109 with use of different formulae from those used by the motion-compensated image correcting sections 11 and 12.

Specifically, the motion-compensated image correcting section 13 corrects the motion-compensated image 109 based on only the change in pixel value of the pixel adjacent to the left side of the encoding target block. A pixel value Mc(i, j) of an image which has been corrected is worked out by the following formulae (Formulae 11 and 12):

$$\mathrm{Mc}(i,j) = \mathrm{M}(i,j) + \Delta \mathrm{Mc}(i,j) \quad (i = 0...L-1, \ j = 0...M-1)$$

$$\cdots (\mathrm{Formula} \ 11)$$

$$\Delta \mathrm{Mc}(i,j) = \Delta \mathrm{S_L}(i,0) \quad (i = 0...L-1, \ j = 0...M-1)$$

$$\cdots (\mathrm{Formula} \ 12)$$

An image having a pixel value represented by "Mc(i, j)" which is worked out by the above Formula 11 corresponds to an image obtained by correcting the motion-compensated image based on the change in pixel value of the pixel adjacent to the left side of the encoding target block. The motion-compensated image correcting section 13 outputs the corrected image to the switch 3.

At this point, the switch 3 has been supplied with three motion-compensated images, which have been corrected by the motion-compensated image correcting sections 11 through 13, respectively.

(Selection of Motion-Compensated Image Correcting Section)

Based on the edge strength obtained in Step S13, the correction method selecting section 2 determines which of a vertical edge and a horizontal edge exists. Then, the correction method selecting section 2 selects a most suitable one out of the motion-compensated image correcting sections 11 through 13 in the following manner:

First, the correction method selecting section 2 determines whether or not a vertical edge exists, based on the edge strength obtained in Step S13 (Step S14). Subsequently, the correction method selecting section 2 determines whether or not a horizontal edge exists (Steps S15 and S16).

Firstly described is a case where YES in Step S14 and NO in Step S15. Specifically, such a case is described where the encoding target block is determined to have a vertical edge but no horizontal edge. In this case, the correction method selecting section 2 selects the motion-compensated image correcting section 12 (Step S17). The reason for this is as follows: As described above, the motion-compensated image correcting section 12 performs the correction based on the change in pixel value of the pixel adjacent to the upper side of the encoding target block. Therefore, in this case, the correction method selecting section 12 is considered to be a correcting section referring to a most suitable region.

14

Secondly described is a case where NO in Step S14 and YES in Step S16. Specifically, such a case is described where the encoding target block is determined to have a horizontal edge but no vertical edge. In this case, the correction method selecting section 2 selects the motion-compensated image correcting section 13 (Step S19). The reason for this is as follows: As described above, the motion-compensated image correcting section 13 performs the correction based on the change in pixel value of the pixel adjacent to the left side of the encoding target block. Therefore, in this case, the correction method selecting section 13 is considered to be a correcting section referring to a most suitable region.

Thirdly described is a case where YES in both of Steps S14 and S15 or NO in both of Steps S14 and S16. Specifically, such a case is described where the encoding target block is determined to have both of a vertical edge and a horizontal edge or where the encoding target block is determined to have none of a vertical edge and a horizontal edge. In this case, the correction method selecting section 2 selects the motion-compensated image correcting section 11 (Step S18). The reason for this is as follows: As described above, the motion-compensated image correcting section 11 performs the correction based on the changes in pixel value of the pixels adjacent to the upper and left sides of the encoding target block. Therefore, in this case, the correction method selecting section 11 is considered to be a correcting section referring to a most suitable region.

Subsequently, each of the motion-compensated image correcting sections 11 through 13 corrects the motion-compensated image 109 (Step S20).

The correction method selecting section 2 outputs, to the switch 3, a selection result 111 obtained as above.

The switch 3 makes a connection to the selected motion-compensated image correcting section, out of the motion-compensated image correcting sections 11 through 13. Consequently, the motion-compensated image 109 which has been corrected by the selected motion-compensated image correcting section is outputted to the switch 4 as a corrected motion-compensated image 110.

According to the correction flag 107 supplied to the switch 4, the switch 4 selects either one of the motion-compensated image 109 and the corrected motion-compensated image 110. Specifically, if the correction flag 107 indicates "with correction", the switch 4 selects the corrected motion-compensated image 110. On the other hand, if the correction flag 17 indicates "without correction", the switch 4 selects the motion-compensated image 109. Subsequently, the switch 4 outputs, to the prediction residual calculating section 23 and the local decoded image generating section 28, the selected image as the predicted image 106 (Step S21).

As described above, based on the edge strength of the motion-compensated image 109, the predicted image generating section 1 selects, from among the plurality of motion-compensated image correcting sections, the one using a most suitable correction method, and corrects the motion-compensated image 109 with use of the selected motion-compensated image correcting section. This allows the correction to be performed by a method more suitable to the local characteristics of the moving image, as compared with a case where a single correction method is always used. Namely, this can improve the accuracy in the correction. Accordingly, this can reduce an amount of encoded data necessary to encode the prediction residuals. Furthermore, since the above configuration does not involve encoding of information indicative of which motion-compensated image correcting section is used to perform the correction, this configuration does not increase the amount of encoded data. Namely, although the number of correction methods increases, the above configuration can avoid an increase in the amount of encoded data.

(Determination Using Edge Angle)

In the above description about the correction method selecting section 2, selection of a correction method is made based on vertical and horizontal edge strengths. However, a criterion for the selection is not limited to this. For example, as described below, an edge angle of the motion-compensated image 109 may be worked out and a correction method may be selected based on the edge angle. The edge angle herein refers to an angle of an edge with respect to an upper or lower side of an encoding target block. Namely, an angle of an edge parallel to an upper or lower side of an encoding target block is 0 degree. In other words, the edge angle is a numerical value representing an edge direction.

An edge angle D of the motion-compensated image 109 can be worked out by, e.g., the following formula (Formula 13):

$$D = \frac{180}{\pi} \times \tan^{-1}\frac{Ev}{EH} \quad \cdots \ (Formula \ 13)$$

If the edge angle D is close to 90 degrees or -90 degrees (e.g., in a case where |D| > 75 degrees), the motion-compensated image can be determined to have an edge in the vertical direction. Therefore, it is desirable to perform the correction with use of a change in pixel value of the pixel adjacent to the upper side of the encoding target block.

Accordingly, the motion-compensated image correcting section 12 is selected.

On the other hand, if the edge angle D is close to 0 degree (e.g., in a case where | D | < 15 degrees), the motion-compensated image can be determined to have an edge in the horizontal direction. Therefore, it is desirable to perform the correction with use of a change in pixel value of the pixel adjacent to the left side of the encoding target block. Accordingly, the motion-compensated image correcting section 13 is selected.

In a case other than the above (e.g., in a case where 15 degrees ≤ | D | 75 degrees), it is impossible to determine (i) whether or not the motion-compensated image includes a horizontal edge and (ii) whether or not the motion-compensated image includes a vertical edge. Therefore, the motion-compensated image correcting section 11 is selected.

According to the above determination method, it is possible to select a most suitable correction method according to the edge angle of the motion-compensated image 109. This makes it possible to correct the motion-compensated image 109 more accurately, as compared with a case where a single correction method is applied.

(Configuration of Moving Image Decoding Device)

Next, the following will describe a moving image decoding device 700 of the present embodiment with reference to Fig. 7.

Fig. 7 is a view illustrating (i) a configuration of a main part of the moving image decoding device 700 and (ii) a flow of data transmitted between sections included in the moving image decoding device 700. As shown in Fig. 7, the moving image decoding device 700 includes an encoded data input section 70, a variable length decoding section 71, an inverse quantization section 26, an inverse orthogonal transformation section 27, a local decoded image generating section 74, a local decoded image output section 75, a predicted image generating section 1 , and a frame memory 29. Note that members identical to those in the moving image encoding device 200 of the present invention are given the same reference numbers as in the moving image encoding device 200, and detailed explanations thereof are omitted here. A process performed by each of the other members will be described in detail later.

(Process Performed by Moving Image Decoding Device 700)

The following will describe, with reference to Fig. 7, a process performed by the moving image decoding device 700.

As shown in Fig. 7, first, the encoded data input section 70 sequentially inputs, into the variable length decoding section 71, encoded data 108 in units of encoding target blocks. The following will describe a process executed for each encoding target block.

From the encoded data 108, the variable length decoding section 71 decodes the motion vector 105, the correction flag 107, and the transformation coefficient levels 102. Subsequently, the variable length decoding section 71 outputs the motion vector 105 and the correction flag 107 to the predicted image generating section 1. Furthermore, the variable length decoding section 71 outputs the transformation coefficient levels 102 to the inverse quantization section 26.

The inverse quantization section 26 performs inverse quantization on the transformation coefficient levels 102, so as to restore them as the frequency conversion coefficients. Subsequently, the inverse quantization section 26 outputs the frequency conversion coefficients to the inverse orthogonal transformation section 27.

The inverse orthogonal transformation section 27 performs an inverse discrete cosine transform on the frequency conversion coefficients, so as to reconstruct the prediction residuals 101. Then, the inverse orthogonal transformation section 27 outputs the prediction residuals 101 to the local decoded image generating section 74.

Next, the following will describe a process performed by the predicted image generating section 1. However, since the process performed by the predicted image generating section 1 in the moving image decoding device 700 is identical to the process performed by the predicted image generating section 1 in the encoding device of the present invention, detailed explanations thereof are omitted here.

Based on (i) the motion vector 105 and the correction flag 107 supplied thereto and (ii) a reference image (i.e., a local decoded image 103) obtained from the frame memory 29, the predicted image generating section 1 generates a motion-compensated image 109. In this process, according to the correction flag 107, the predicted image generating section 1 determines the presence or absence of the correction, and generates a corrected motion-compensated image 110, which is prepared by correcting the motion-compensated image 109, if necessary.

In generating the corrected motion-compensated image 110, a most suitable correction method is selected based on the characteristics of the motion-compensated image 109. Then, the motion-compensated image 109 or the corrected motion-compensated image 110 is outputted to the local decoded image generating section 74 as a predicted image 106.

The local decoded image generating section 74 adds (i) the predicted image 106 supplied from the predicted image generating section 1 to (ii) the prediction residuals 101 supplied from the inverse orthogonal transformation section 27, in order to generate a local decoded image 103. Subsequently, the local decoded image generating section 74 causes the local decoded image 103 to be stored in the frame memory 29, and outputs the local decoded image 103 to the local decoded image output section 75.

The local decoded image output section 75 outputs the local decoded image 103 as a reproduction image to an external reproduction device (not illustrated), etc., if necessary.

As described above, the moving image decoding device of the present embodiment includes the predicted image generating section identical to the predicted image generating section included in the moving image encoding device of the present embodiment. Therefore, the moving image decoding device of the present embodiment can generate a predicted image based on the motion vector, the correction flag, and the local decoded image. Accordingly, the decoded data does not need to include information indicative of which of the motion-compensated image correcting sections was used to perform the correction; therefore, it is possible to reduce an amount of decoded data. Furthermore, as compared with a case where a single correction mode is used to correct the motion-compensated image, it is possible to generate a predicted image which expresses an original image (i.e., an input image supplied to the moving image encoding device) more accurately. Therefore, a reproduction image generated by adding the prediction residuals to such the predicted image can be the one reproducing the original image more accurately.

[Embodiment 2]

(Configuration of Moving Image Encoding Device)

The following will describe a moving image encoding device according to Embodiment 2 of the present invention.

First, the following will describe a configuration of the moving image encoding device of the present embodiment. The configuration of the moving image encoding device of the present embodiment is identical to that of the moving image encoding device 200 of Embodiment 1 in which the predicted image generating section 1 shown in Fig. 1 is replaced with a predicted image generating section 1a, which has a different function from that of the predicted image generating section 1. The following will describe details of the predicted image generating section 1a, which is a difference from Embodiment 1.

(Configuration of Predicted Image Generating Section 1a)

The following will describe a configuration of the predicted image generating section 1a with reference to Fig. 8. Fig. 8 is a block diagram illustrating (i) a configuration of a main part of the predicted image generating section 1a according to this embodiment of the present invention and (ii) a flow of data transmitted between sections included in the predicted image generating section 1a.

As shown in Fig. 8, members other than a correction method selecting section 2a (calculation means, correction means) are identical to the members included in the predicted image generating section 1, which has been described with reference to Fig. 1. Therefore, these members are given the same reference numbers as those in the predicted image generating section 1, and detailed explanations thereof are omitted here.

(Process Performed by Predicted Image Generating Section 1a)

With reference to Figs. 8 and 9, the following will describe a process performed by the predicted image generating section 1a according to this embodiment of the present invention.

Fig. 9 is a flow chart of the process performed by the predicted image generating section 1a according to this embodiment of the present invention.

As shown in Fig. 8, first, a candidate predicted image generating section 10 is supplied with a local decoded image 103 and a motion vector 105. Based on the local decoded image 103 and the motion vector 105, a motion-compensated image generating section 14 generates a motion-compensated image 109 (Step S30). Subsequently, the motion-compensated image generating section 14 outputs the motion-compensated image 109 to a switch 4 and motion-compensated image correcting sections 11 through 13 (Step S31).

Here, a difference between Embodiments 1 and 2 is that the motion-compensated image 109 is not inputted to the correction method selecting section 2a. Instead of the motion-compensated image 109, the local decoded image 103 is inputted to the correction method selecting section 2a. Therefore, in the present embodiment, the correction method selecting section 2a refers to the local decoded image 103 in order to select a suitable correction method for correcting the motion-compensated image 109. A criterion for the selection will be described in detail later.

Note that a method of how to work out a pixel included in the motion-compensated image 109 is the same as that in Embodiment 1. Therefore, explanations thereof are omitted here.

(Switch 4)

Meanwhile, the switch 4 is supplied with a correction flag 107. According to the correction flag 107 thus supplied, the switch 4 determines whether or not a correction is unnecessary for the motion-compensated image 109 (Step S32). If the correction flag 107 indicates "without correction" and the switch 4 determines that the correction is unnecessary, the switch 4 outputs, to an image comparing section 31 and a candidate predicted image storing section 32 included in a predicted image processing section 22 shown in Fig. 3, the motion-compensated image 109 as a predicted image 106 (Step S41).

On the other hand, if the correction flag 107 indicates "with correction" and the switch 4 determines that the correction is necessary, the predicted image generating section 1a executes the following steps:

First, the correction method selecting section 2a refers to the local decoded image 103 so as to work out an index representing a correlation between (i) a change in pixel value in an input image 100 between frames which change is observed in an encoding target block and (ii) a change in pixel value in the local decoded image 103 between the frames which change is observed in a neighboring region being adjacent to the encoding target block. Then, based on the index thus worked out, the correction method selecting section 2a selects one from among the plurality of correction means. Namely, the correction method selecting section 2a selects, out of the motion-compensated image correcting sections 11 through 13, a correcting section which is to be used to perform the correction.

Specifically, the correction method selecting section 2a works out a discontinuity of pixel values in a region of the local decoded image 103, the region being adjacent to an upper or left side of a block on the local decoded image 103, the block corresponding to the encoding target block (Step S33). Based on the discontinuity thus worked out, the correction method selecting section 2a selects a motion-compensated image correcting section which performs a most suitable correction (Steps S37 through S39). Steps S37 through S39 will be described in detail later. The discontinuity herein refers to a state where pixel values of respective pixels adjacent to each other are extremely different from each other, i.e., a degree of a change in pixel value.

(Detection of Discontinuity)

Next, the following will describe, with reference to the following formulae (Formulae 14 and 15), how the correction method selecting section 2a detects the discontinuity.

The correction method selecting section 2a first works out, by Formula 14, a horizontal discontinuity DH of pixel values in a region of the local decoded image 103, the region being adjacent to the upper side of the encoding target block.

$$\mathrm{DH} = \sum_{i=0}^{i<L} \left| \mathrm{Ic}(x_c + i, y_c - 1) - \mathrm{Ic}(x_c + i - 1, y_c - 1) \right| \quad \cdots \text{(Formula 14)}$$

Next, the correction method selecting section 2a works out, by Formula 15, a vertical discontinuity DV of pixel values a region of the local decoded image 103, the region being adjacent to the left side of the encoding target block.

$$\mathrm{Dv} = \sum_{j=0}^{j<M} \left| \mathrm{Ic}(x_c - 1, y_c + j) - \mathrm{Ic}(x_c - 1, y_c + j - 1) \right| \quad \cdots \text{(Formula 15)}$$

If the discontinuity DH, worked out according to Formula 14, is greater than a predetermined threshold value, the correction method selecting section 2a determines that the pixel values are discontinuous in the region of the local decoded image 103, the region being adjacent to the upper side of the encoding target block. On the other hand, if the discontinuity DH, worked out by Formula 14, is equal to or smaller than the predetermined threshold value, the correction method selecting section 2a determines that the pixel values are not discontinuous in the region of the local decoded image 103, the region being adjacent to the upper side of the encoding target block.

Similarly, if the discontinuity DV, worked out according to Formula 15, is greater than a predetermined threshold value, the correction method selecting section 2a determines that the pixel values are discontinuous in the region of the local decoded image 103, the region being adjacent to the left side of the encoding target block. On the other hand, if the discontinuity DV, worked out according to Formula 15, is equal to or smaller than the predetermined threshold value, the correction method selecting section 2a determines that the pixel values are not discontinuous in the region of the local decoded image 103, the region being adjacent to the left side of the encoding target block.

(Selection of Motion-Compensated Image Correcting Section)

Based on the discontinuity obtained in Step S33, the correction method selecting section 2a selects a most suitable one out of the motion-compensated image correcting sections 11 through 13 as follows:

First, based on the discontinuity obtained in Step S33, the correction method selecting section 2a determines whether or not the pixel values are discontinuous in the region adjacent to the upper side of the encoding target block (Step S34). Next, the correction method selecting section 2a determines whether or not the pixel values are discontinuous in the region adjacent to the left side of the encoding target block (Steps S35 and S36).

Firstly described is a case where YES in Step S34 and NO in Step S35. Specifically, such a case is described where (i) the pixel values are determined to be discontinuous in the region adjacent to the upper side of the encoding target block and (ii) the pixel values are determined to be continuous in the region adjacent to the left side of the encoding target block. In this case, the encoding target block can be assumed to have a vertical edge.

As with the case described in Embodiment 1, if the encoding target block is assumed to have a vertical edge, the correction method selecting section 2a selects the motion-compensated image correcting section 12 (Step S37).

Secondly described is a case where NO in Step S34 and YES in Step S36. Specifically, such a case is described where (i) the pixel values are determined to be continuous in the region adjacent to the upper side of the encoding target block and (ii) the pixel values are determined to be discontinuous in the region adjacent to the left side of the encoding target block. In this case, the encoding target block can be assumed to have a horizontal edge.

As with the case described in Embodiment 1 , if the encoding target block is assumed to have a horizontal edge, the correction method selecting section 2a selects the motion-compensated image correcting section 13 (Step S19).

Thirdly described is a case where YES in both of Steps S34 and S35 or NO in both of Steps S34 and S36. Specifically, such a case is described where the pixel values are determined to be continuous both in (i) the region adjacent to the upper side of the encoding target block and (ii) the region adjacent to the left side of the encoding target block, or where the pixel values are determined to be discontinuous both in (i) the region adjacent to the upper side of the encoding target block and (ii) the region adjacent to the left side of the encoding target block. In this case, the encoding target block can be assumed to have both of a vertical edge and a horizontal edge or to have none of a vertical edge and a horizontal edge.

As with the case described in Embodiment 1, if it is impossible to determine (i) whether or not the encoding target block has a vertical edge and (ii) whether or not the encoding target block has a horizontal edge, the correction method selecting section 2a selects the motion-compensated image correcting section 11 (Step S38).

Subsequently, each of the motion-compensated image correcting sections 11 through 13 corrects the motion-compensated image 109 (Step S40).

The correction method selecting section 2a outputs, to a switch 3, a selection result 111 obtained as above.

The switch 3 makes a connection to the selected motion-compensated image correcting section, out of the motion-compensated image correcting sections 11 through 13. Consequently, the motion-compensated image 109 which has been corrected by the selected motion-compensated image correcting section is outputted to the switch 4 as a corrected motion-compensated image 110.

According to the correction flag 107 supplied to the switch 4, the switch 4 selects either one of the motion-compensated image 109 and the corrected motion-compensated image 110. Specifically, if the correction flag 107 indicates "with correction", the switch 4 selects the corrected motion-compensated image 110. On the other hand, if the correction flag 17 indicates "without correction", the switch 4 selects the motion-compensated image 109. Subsequently, the switch 4 outputs, to the image comparing section 31 and the candidate predicted image storing section 32 included in the predicted image processing section 22 shown in Fig. 3, the selected image as the predicted image 106 (Step S41).

As described above, based on the discontinuity of the pixel values in the region adjacent to the upper or left side of the block on the local decoded image 103 which block corresponds to the encoding target block, the predicted image generating section 1a selects, from among the plurality of motion-compensated image correcting sections, the one using a most suitable correction method. Then, the predicted image generating section 1a corrects the motion-compensated image 109 with use of the selected motion-compensated image correcting section. With this, it is possible to achieve the same effects as in Embodiment 1.

[Embodiment 3]

(Configuration of Moving Image Encoding Device)

The following will describe a moving image encoding device according to Embodiment 3 of the present invention.

First, the following will describe a configuration of the moving image encoding device of the present embodiment.

The configuration of the moving image encoding device of the present embodiment is identical to that of the moving image encoding device 200 of Embodiment 1 in which the predicted image generating section 1 shown in Fig. 1 is replaced with a predicted image generating section 1b, which has a different function from that of the predicted image generating section 1. The following will describe details of the predicted image generating section 1b, which is a difference from Embodiment 1.

(Configuration of Predicted Image Generating Section 1b)

The following will describe a configuration of the predicted image generating section 1b with reference to Fig. 10. Fig. 10 is a block diagram illustrating (i) a configuration of a main part of the predicted image generating section 1b according to this embodiment of the present invention and (ii) a flow of data transmitted between sections included in the predicted image generating section 1b.

As shown in Fig. 10, members other than a correction method selecting section 2b (calculation means, correction means) are identical to the members included in the predicted image generating section 1, which has been described with reference to Fig. 1. Therefore, such the members are given the same reference numbers as those in the predicted image generating section 1, and detailed explanations thereof are omitted here.

(Process Performed by Predicted Image Generating Section 1b)

With reference to Figs. 10 and 11, the following will describe a process performed by the predicted image generating section 1b according to this embodiment of the present invention.

Fig. 11 is a flow chart of the process performed by the predicted image generating section 1b according to this embodiment of the present invention.

As shown in Fig. 10, first, a candidate predicted image generating section 10 is supplied with a local decoded image 103 and a motion vector 105. Based on the local decoded image 103 and the motion vector 105, a motion-compensated image generating section 14 generates a motion-compensated image 109 (Step S50). Subsequently, the motion-compensated image generating section 14 outputs the motion-compensated image 109 to a switch 4 and motion-compensated image correcting sections 11 through 13 (Step S51).

Here, a difference between Embodiments 1 and 3 is that the motion-compensated image 109 is not inputted to the correction method selecting section 2b. Instead of the motion-compensated image 109, the motion vector 105 and the local decoded image 103 are inputted to the correction method selecting section 2b. Therefore, in the present embodiment, the correction method selecting section 2b refers to the motion vector 105 and the local decoded image 103 in order to select a suitable correction method for correcting the motion-compensated image 109. A criterion for the selection will be described in detail later.

Note that a method of how to work out a pixel included in the motion-compensated image 109 is the same as that in Embodiment 1. Therefore, explanations thereof are omitted here.

(Switch 4)

Meanwhile, the switch 4 is supplied with a correction flag 107. According to the correction flag 107 thus supplied, the switch 4 determines whether or not a correction is unnecessary for the motion-compensated image 109 (Step S52). If the correction flag 107 indicates "without correction" and the switch 4 determines that the correction is unnecessary, the switch 4 outputs, to an image comparing section 31 and a candidate predicted image storing section 32 included in a predicted image processing section 22 shown in Fig. 3, the motion-compensated image 109 as a predicted image 106 (Step S61).

On the other hand, if the correction flag 107 indicates "with correction" and the switch 4 determines that the correction is necessary, the predicted image generating section 1b executes the following steps:

First, the correction method selecting section 2b refers to the motion vector 105 and the local decoded image 103 so as to work out an index representing a correlation between (i) a change in pixel value in an input image 100 between frames which change is observed in an encoding target block and (ii) a change in pixel value in the local decoded image 103 between the frames which change is observed in a neighboring region being adjacent to the encoding target block. Specifically, the correction method selecting section 2b works out an index corresponding to a numerical value representing a correlation between (i) a change in pixel value between frames (i.e., between an encoding target frame and a reference frame) which change is observed in the encoding target block and (ii) a change in pixel value which change is observed in a region of the local decoded image 103, the region being adjacent to an upper or left side of a block on the local decoded image 103, the block corresponding to the encoding target block. Then, based on the index thus worked out, the correction method selecting section 2b selects one from among the plurality of correction means. Namely, the correction method selecting section 2b selects, out of the motion-compensated image correcting sections 11 through 13, a correcting section which is to be used to perform the correction.

The correction method selecting section 2b works out the change in pixel value between the frames which change is observed in the region of the local decoded image 103 which region is adjacent to the upper or left side of the encoding target block (Step S53). Then, based on the change in pixel value thus worked out, the correction method selecting section 2b selects a motion-compensated image correcting section which performs a most suitable correction (Steps S57 through S59). Steps S57 through S59 will be described in detail later. The change in pixel value herein refers to a difference between pixel values of pixels in the respective frames, the pixels corresponding to each other.

(Detection of Change in Pixel Value)

The following will describe how the correction method selecting section 2b detects the change in pixel value.

The correction method selecting section 2b first works out (i) ΔST, which represents a change in pixel value of a pixel adjacent to the upper side of the encoding target block, and (ii) ΔSL, which represents a change in pixel value of a pixel adjacent to the left side of the encoding target block. (For a method of working out ΔST and ΔSL, see Formulae 7 and 8 in the description about the motion-compensated image correcting section 11 of Embodiment 1.)

Next, the correction method selecting section 2b works out (i) AT, which represents a degree of a change in pixel value in a region adjacent to the upper side of the encoding target block, and (ii) AL, which represents a degree of a change in pixel value in a region adjacent to the left side of the encoding target block, by the following formulae (Formulae 16 and 17), respectively:

$$\mathrm{AT} = \frac{1}{L} \sum_{i=0}^{i<L} \left| \Delta\mathrm{ST}(i,0) \right| \quad \cdots \quad (\mathrm{Formula} \ 16)$$

$$\mathrm{AL} = \frac{1}{M} \sum_{j=0}^{j<M} \left| \Delta\mathrm{SL}(0,j) \right| \quad \cdots \quad (\mathrm{Formula} \ 17)$$

If AT, which represents the degree of the change in pixel value obtained by Formula 16, is greater than a predetermined threshold value, the correction method selecting section 2b determines that the change in pixel value is large in the region of the local decoded image 103, the region being adjacent to the upper side of the encoding target block. On the other hand, if AT is equal to or smaller than the predetermined threshold value, the correction method selecting section 2b determines that the change in pixel value is small therein.

Similarly, if AL, which represents the degree of the change in pixel value obtained by Formula 17, is greater than a predetermined threshold value, the correction method selecting section 2b determines that the change in pixel value is small in the region of the local decoded image 103, the region being adjacent to the left side of the encoding target block. On the other hand, if AL is equal to or smaller than the predetermined threshold value, the correction method selecting section 2b determines that the change in pixel value is small therein.

(Selection of Motion-Compensated Image Correcting Section)

Based on the degree of the change in pixel value obtained in Step S53, the correction method selecting section 2b selects a most suitable one out of the motion-compensated image correcting sections 11 through 13 as follows:

First, based on the degree of the change in pixel value obtained in Step S53, the correction method selecting section 2b determines whether or not the change in pixel value is large in the region adjacent to the upper side of the encoding target block (Step S54). Next, the correction method selecting section 2b determines whether or not the change in pixel value is large in the region adjacent to the left side of the encoding target block (Steps S55 and S56).

Firstly described is a case where YES in Step S54 and NO in Step S55. Specifically, such a case is described where (i) the change in pixel value is determined to be large in the region adjacent to the upper side of the encoding target block and (ii) the change in pixel value is determined to be small in the region adjacent to the left side of the encoding target block.

In this case, the correction method selecting section 2b selects the motion-compensated image correcting section 12 (Step S57). The reason for this is as follows: As described in Embodiment 1, the motion-compensated image correcting section 12 performs the correction based on the change in pixel value of the pixel adjacent to the upper side of the encoding target block. Therefore, in this case, the correction method selecting section 12 is considered to be a most suitable motion-compensated image correcting section.

Secondly described is a case where NO in Step S54 and YES in Step S56. Specifically, such a case is described where (i) the change in pixel value is determined to be small in the region adjacent to the upper side of the encoding target block and (ii) the change in pixel value is determined to be large in the region adjacent to the left side of the encoding target block.

In this case, the correction method selecting section 2b selects the motion-compensated image correcting section 13 (Step S59). The reason for this is as follows: As described in Embodiment 1, the motion-compensated image correcting section 13 performs the correction based on the change in pixel value of the pixel adjacent to the left side of the encoding target block. Therefore, in this case, the correction method selecting section 13 is considered to be a most suitable motion-compensated image correcting section.

Thirdly described is a case where YES in both of Steps S54 and S55 or NO in both of Steps S54 and S56. Specifically, such a case is described where (i) the change in pixel value in the region adjacent to the upper side of the encoding target block and (ii) the change in pixel value in the region adjacent to the left side of the encoding target block are determined to be both large or both small.

In this case, the correction method selecting section 2b selects the motion-compensated image correcting section 11 (Step S58). The reason for this is as follows: As described in Embodiment 1, the motion-compensated image correcting section 11 performs the correction based on the changes in pixel value of the pixels adjacent to the upper and left sides of the encoding target block. Therefore, in this case, the correction method selecting section 11 is considered to be a most suitable motion-compensated image correcting section.

Subsequently, each of the motion-compensated image correcting sections 11 through 13 corrects the motion-compensated image 109 (Step S60).

The correction method selecting section 2a outputs, to a switch 3, a selection result 111 obtained as above.

The switch 3 makes a connection to the selected motion-compensated image correcting section, out of the motion-compensated image correcting sections 11 through 13. Consequently, the motion-compensated image 109 which has been corrected by the selected motion-compensated image correcting section is outputted to the switch 4 as a corrected motion-compensated image 110.

According to the correction flag 107 supplied to the switch 4, the switch 4 selects either one of the motion-compensated image 109 and the corrected motion-compensated image 110. Specifically, if the correction flag 107 indicates "with correction", the switch 4 selects the corrected motion-compensated image 110. On the other hand, if the correction flag 17 indicates "without correction", the switch 4 selects the motion-compensated image 109. Subsequently, the switch 4 outputs, to the image comparing section 31 and the candidate predicted image storing section 32 included in the predicted image processing section 22 shown in Fig. 3, the selected image as the predicted image 106 (Step S61).

As described above, the predicted image generating section 1b selects, from among the plurality of motion-compensated image correcting sections, the one using a most suitable correction method, based on the degree of the change in pixel value between the frames, the degree of the change in pixel value being observed in a region on a current image which has been decoded, the region being adjacent to the upper or left side of the block on the local decoded image 103, the block corresponding to the encoding target block. Then, the predicted image generating section 1b corrects the motion-compensated image 109 with use of the selected motion-compensated image correcting section. With this, it is possible to achieve the same effects as in Embodiment 1.

[Embodiment 4]

(Configuration of Moving Image Encoding Device)

The following will describe a moving image encoding device according to Embodiment 4 of the present invention.

First, the following will describe a configuration of the moving image encoding device of the present embodiment. The configuration of the moving image encoding device of the present embodiment is identical to that of the moving image encoding device 200 of Embodiment 1 in which the predicted image generating section 1 shown in Fig. 1 is replaced with a predicted image generating section 1c, which has a different function from that of the predicted image generating section 1. The following will describe details of the predicted image generating section 1c, which is a difference from Embodiment 1.

(Configuration of Predicted Image Generating Section 1c)

The following will describe a configuration of the predicted image generating section 1c with reference to Fig.

12. Fig. 12 is a block diagram illustrating (i) a configuration of a main part of the predicted image generating section 1c according to this embodiment of the present invention and (ii) a flow of data transmitted between sections included in the predicted image generating section 1c.

As shown in Fig. 12, members other than a correction method selecting section 2c (calculation means, correction means) are identical to the members included in the predicted image generating section 1, which has been described with reference to Fig. 1. Therefore, these members are given the same reference numbers as those in the predicted image generating section 1, and detailed explanations thereof are omitted here.

(Process Performed by Predicted Image Generating Section 1c)

With reference to Figs. 12 and 13, the following will describe a process performed by the predicted image generating section 1c according to this embodiment of the present invention.

Fig. 13 is a flow chart of the process performed by the predicted image generating section 1c according to this embodiment of the present invention.

As shown in Fig. 12, first, a candidate predicted image generating section 10 is supplied with a motion vector 105 and a local decoded image 103. Based on the motion vector 105 and the local decoded image 103, a motion-compensated image generating section 14 generates a motion-compensated image 109 (Step S70). Subsequently, the motion-compensated image generating section 14 outputs the motion-compensated image 109 to a switch 4 and motion-compensated image correcting sections 11 through 13 (Step S71).

Here, a difference between Embodiments 1 and 4 is that the motion-compensated image 109 is not inputted to the correction method selecting section 2c. Instead of the motion-compensated image 109, the motion vector 105 is inputted to the correction method selecting section 2c. Therefore, in the present embodiment, the correction method selecting section 2c refers to the motion vector 105 in order to select a suitable correction method for correcting the motion-compensated image 109. A criterion for the selection will be described in detail later.

Note that a method of how to work out a pixel included in the motion-compensated image 109 is the same as that in Embodiment 1. Therefore, explanations thereof are omitted here.

(Switch 4)

Meanwhile, the switch 4 is supplied with a correction flag 107. According to the correction flag 107 thus supplied, the switch 4 determines whether or not a correction is unnecessary for the motion-compensated image 109 (Step S72). If the correction flag 107 indicates "without correction" and the switch 4 determines that the correction is unnecessary, the switch 4 outputs, to an image comparing section 31 and a candidate predicted image storing section 32 included in a predicted image processing section 22 shown in Fig. 3, the motion-compensated image 109 as a predicted image 106 (Step S81).

On the other hand, if the correction flag 107 indicates "with correction" and the switch 4 determines that the correction is necessary, the predicted image generating section 1c executes the following steps:

First, the correction method selecting section 2c refers to the motion vector 105 so as to work out an index representing a correlation between (i) a change in pixel value in an input image 100 between frames which change is observed in an encoding target block and (ii) a change in pixel value in the local decoded image 103 between the frames which change is observed in a neighboring region being adjacent to the encoding target block. Specifically, the correction method selecting section 2c works out an index corresponding to a numerical value representing a similarity level (similarity) between (i) a motion vector 105 for the encoding target block and (ii) a motion vector 105 for an encoded block adjacent to the encoding target block. Then, based on the index thus worked out, the correction method selecting section 2c selects one from among the plurality of correction means. Namely, the correction method selecting section 2c selects, out of the motion-compensated image correcting sections 11 through 13, a correcting section which is to be used to perform the correction.

The correction method selecting section 2c works out a similarity level between (i) the motion vector 105 for the encoding target block and (ii) a motion vector 105 for an encoded block adjacent to an upper or left side of the encoding target block (Step S73). Then, based on the similarity level thus worked out, the correction method selecting section 2c selects a motion-compensated image correcting section which performs a most suitable correction (Steps S77 through S79). Steps S77 through S79 will be described in detail later.

(Detection of Change in Pixel Value)

The following will describe how the correction method selecting section 2c detects the change in pixel value.

The correction method selecting section 2c first works out a dissimilarity level SV between (i) a motion vector MC for the encoding target block and (ii) a motion vector MT for the encoded block adjacent to the upper side of the encoding target block. A value of the dissimilarity level SV is worked out by the following formula (Formula 18):

$$Sv = \left\| \mathbf{M}c - \mathbf{M}\tau \right\| \quad \cdots \text{(Formula 18)}$$

The correction method selecting section 2c further works out a dissimilarity level SL between (i) the motion vector MC for the encoding target block and (ii) a motion vector ML for the encoded block adjacent to the left side of the encoding target block. A value of the dissimilarity level SH is worked out by the following formula (Formula 19):

$$SH = \left\| \mathbf{M}c - \mathbf{M}L \right\| \quad \cdots \text{(Formula 19)}$$

If the dissimilarity level SV, worked out according to Formula 18, is smaller than a predetermined threshold value, the correction method selecting section 2c determines that (i) the motion vector for the encoding target block and (ii) the motion vector for the encoded block adjacent to the upper side of the encoding target block are similar to each other. On the other hand, if the dissimilarity SV is equal to or greater than the predetermined threshold value, the correction method selecting section 2c determines that (i) the motion vector for the encoding target block and (ii) the motion vector for the encoded block adjacent to the upper side of the encoding target block are not similar to each other.

Similarly, if the dissimilarity level SH, worked out according to Formula 19, is smaller than a predetermined threshold value, the correction method selecting section 2c determines that (i) the motion vector for the encoding target block and (ii) the motion vector for the encoded block adjacent to the left side of the encoding target block are similar to each other. On the other hand, if the dissimilarity level SH is equal to or greater than the predetermined threshold value, the correction method selecting section 2c determines that (i) the motion vector for the encoding target block and (ii) the motion vector for the encoded block adjacent to the left side of the encoding target block are not similar to each other.

(Selection of Motion-Compensated Image Correcting Section)

Based on the similarity level between the motion vectors which similarity level is obtained in Step S73, the correction method selecting section 2c selects a most suitable one out of the motion-compensated image correcting sections 11 through 13 as follows:

First, based on the similarity level between the motion vectors which similarity level is obtained in Step S73, the correction method selecting section 2c determines whether or not (i) the motion vector for the encoding target block and (ii) the motion vector for the encoded block adjacent to the upper side of the encoding target block are similar to each other (Step S74). Next, the correction method selecting section 2c determines whether or not (i) the motion vector for the encoding target block and (ii) the motion vector for the encoded block adjacent to the left side of the encoding target block are similar to each other (Steps S75 and S76).

Firstly described is a case where YES in Step S74 and NO in Step S75. Specifically, such a case is described where (i) the motion vector for the encoding target block and (ii) the motion vector for the encoded block adjacent to the upper side of the encoding target block are determined to be similar to each other but (i) the motion vector for the encoding target block and (ii) the motion vector for the encoded block adjacent to the left side of the encoding target block are determined not to be similar to each other.

In this case, the correction method selecting section 2c selects the motion-compensated image correcting section 12 (Step S77). The reason for this is as follows: In the case where (i) the motion vector for the encoding target block and (ii) the motion vector for the encoded block adjacent to the upper side of the encoding target block are similar to each other, there is a high possibility that the encoding target block and the block adjacent to the upper side of the encoding target block belong to the same object. Here, note that two blocks belonging to the same object have a high correlation with each other in terms of a change in pixel value. As described in Embodiment 1, the motion-compensated image correcting section 12 performs the correction based on the change in pixel value of the pixel adjacent to the upper side of the encoding target block. Therefore, in this case, the motion-compensated image correcting section 12 is considered to be a most suitable motion-compensated image correcting section.

Secondly described is a case where NO in Step S74 and YES in Step S76. Specifically, such a case is described where (i) the motion vector for the encoding target block and (ii) the motion vector for the encoded block adjacent to the upper side of the encoding target block are determined not to be similar to each other but (i) the motion vector for the encoding target block and (ii) the motion vector for the encoded block adjacent to the left side of the encoding target block are determined to be similar to each other.

In this case, the correction method selecting section 2c selects the motion-compensated image correcting section 13 (Step S79). The reason for this is as follows: In the case where (i) the motion vector for the encoding target block and (ii) the motion vector for the encoded block adjacent to the left side of the encoding target block are similar to each other, there is a high possibility that the encoding target block and the block adjacent to the left side of the encoding target block belong to the same object. Here, note that two blocks belonging to the same object have a high correlation with each other in terms of a change in pixel value. As described in Embodiment 1, the motion-compensated image correcting section 13 performs the correction based on the change in pixel value of the pixel adjacent to the left side of the encoding target block. Therefore, in this case, the motion-compensated image correcting section 13 is considered to be a most suitable motion-compensated image correcting section.

Thirdly described is a case where YES in both of Steps S74 and S75 or NO in both of Steps S74 and S76. Specifically, such a case is described where (i) the motion vector for the encoding target block and (ii) the motion vector for the encoded block adjacent to the upper side of the encoding target block are determined to be similar to each other and (i) the motion vector for the encoding target block and (ii) the motion vector for the encoded block adjacent to the left side of the encoding target block are also determined to be similar to each other, or where (i) the motion vector for the encoding target block and (ii) the motion vector for the encoded block adjacent to the upper side of the encoding target block are determined not to be similar to each other and (i) the motion vector for the encoding target block and (ii) the motion vector for the encoded block adjacent to the left side of the encoding target block are also determined not to be similar to each other.

In this case, the correction method selecting section 2c selects the motion-compensated image correcting section 11 (Step S78). The reason for this is as follows: In the case where (i) the motion vector for the encoding target block and (ii) the motion vector for the encoded block adjacent to the upper side of the encoding target block are similar to each other and (i) the motion vector for the encoding target block and (ii) the motion vector for the encoded block adjacent to the left side of the encoding target block are also similar to each other, there is a high possibility that the encoding target block, the encoded block adjacent to the upper side of the encoding target block, and the encoded block adjacent to the left side of the encoding target block belong to the same object. As described in Embodiment 1, the motion-compensated image correcting section 11 performs the correction based on the changes in pixel value of the pixels adjacent to the upper and left sides of the encoding target block. Therefore, in this case, the correction method selecting section 11 is considered to be a most suitable motion-compensated image correcting section. On the other hand, in the case where (i) the motion vector for the encoding target block and (ii) the motion vector for the encoded block adjacent to the upper side of the encoding target block are not similar to each other and (i) the motion vector for the encoding target block and (ii) the motion vector for the encoded block adjacent to the left side of the encoding target block are also not similar to each other, it is impossible to assume whether or not (i) the encoding target block and (ii) the encoded block adjacent to the upper or left side of the encoding target block exist in the same object. Namely, in this case, it is impossible to determine a correlation between the changes in pixel value in these blocks. However, as described in Embodiment 1, the motion-compensated image correcting section 11 performs the correction based on the changes in pixel value of the pixels adjacent to the upper and left sides of the encoding target block. Therefore, also in this case, the motion-compensated image correcting section 11 is considered to be a most suitable motion-compensated image correcting section.

Subsequently, each of the motion-compensated image correcting sections 11 through 13 corrects the motion-compensated image 109 (Step S80).

The correction method selecting section 2 outputs, to the switch 3, a selection result 111 obtained as above.

The switch 3 makes a connection to the selected motion-compensated image correcting section, out of the motion-compensated image correcting sections 11 through 13. Consequently, the motion-compensated image 109 which has been corrected by the selected motion-compensated image correcting section is outputted to the switch 4 as a corrected motion-compensated image 110.

According to the correction flag 107 supplied to the switch 4, the switch 4 selects either one of the motion-compensated image 109 and the corrected motion-compensated image 110. Specifically, if the correction flag 107 indicates "with correction", the switch 4 selects the corrected motion-compensated image 110. On the other hand, if the correction flag 17 indicates "without correction", the switch 4 selects the motion-compensated image 109. Subsequently, the switch 4 outputs, to the prediction residual calculating section 23 and the local decoded image generating section 28, the selected image as the predicted image 106 (Step S81).

As described above, the predicted image generating section 1c selects, from among the plurality of motion-compensated image correcting sections, the one using a most suitable correction method, based on the similarity level between the motion vectors for the respective frames, the similarity level being worked out in the region on a current image which has been encoded, the region being adjacent to the upper or left side of the encoding target block. Then, the predicted image generating section 1c corrects the motion-compensated image 109 with use of the selected motion-compensated image correcting section. With this, it is possible to achieve the same effects as in Embodiment 1.

Industrial Applicability

The present invention can be widely used, e.g., by being provided as a moving image encoding device in general video devices. For example, the present invention can be realized by being provided in HDD recorders, mobile terminals such as mobile phone devices, etc.

Reference Signs List

1, 1a, 1b, 1c Predicted image generating section
2, 2a, 2b, 2c Correction method selecting section (calculation means) (selection means)
3 Switch
4 Switch
10 Candidate predicted image generating section
11, 12, 13 Motion-compensated image correcting section (correction means)
14 Motion-compensated image generating section
20 Image input section
21 Motion detecting section
22 Predicted image processing section
23 Prediction residual calculating section
24 Orthogonal transformation section
25 Quantization section
26 Inverse quantization section
27 Inverse orthogonal transformation section
28 Local decoded image generating section
29 Frame memory
200 Moving image encoding device (moving image encoding device)
201 Variable length coding section
202 Encoded data output section
30 Predicted image selecting section
31 Image comparing section
32 Candidate predicted image storing section
51, 142 Encoding target block
52, 53, 141 Region
54 Edge
700 Moving image decoding device (moving image decoding device)
70 Encoded data input section
71 Variable length decoding section
74 Local decoded image generating section
75 Local decoded image output section
100 Input image
101 Prediction residual
102 Transformation coefficient level
103 Local decoded image
105, 151 Motion vector
106 Predicted image (predicted image)
107 Correction flag
108 Encoded data
109 Motion-compensated image (motion-compensated image)
110 Corrected motion-compensated image
111 Selection result
112 Evaluation value R
140 Target image
152 Reference block

EP 2 315 446 A1

153 Reference block-neighboring region
154 Encoding target block-neighboring region

**Claims**

1. A moving image encoding device for encoding, for each block, a difference between an input image and a predicted image, comprising:

    calculation means for working out an index indicative of a correlation between (i) a change in pixel value in the input image between frames which change is observed in an encoding target block and (ii) a change in pixel value in a local decoded image between the frames which change is observed in a neighboring region being adjacent to the encoding target block;
    a plurality of correction means each for correcting a motion-compensated image based on a change in pixel value in the local decoded image between the frames which change is observed in a respective one of mutually different regions included in the neighboring region; and
    selection means for selecting one of the plurality of correction means based on the index, so that the motion-compensated image corrected by the selected correction means is used as the predicted image.

2. The moving image encoding device as set forth in claim 1, wherein:

    the plurality of correction means include at least two of:

        first correction means for correcting the motion-compensated image based on a change in pixel value in the local decoded image between the frames which change is observed in a region adjacent to an upper side of the encoding target block;
        second correction means for correcting the motion-compensated image based on a change in pixel value in the local decoded image between the frames which change is observed in a region adjacent to a left side of the encoding target block; and
        third correction means for correcting the motion-compensated image based on changes in pixel value in the local decoded image between the frames which changes are respectively observed in (i) the region adjacent to the upper side of the encoding target block and (ii) the region adjacent to the left side of the encoding target block.

3. The moving image encoding device as set forth in claim 1 or 2, wherein:

    the calculation means works out the index by referring to a pixel value in the motion-compensated image.

4. The moving image encoding device as set forth in claim 3, wherein:

    the index is a numerical value indicative of an edge strength or an edge direction in the motion-compensated image.

5. The moving image encoding device as set forth in claim 1 or 2, wherein:

    the calculation means works out the index by referring to a pixel value in the local decoded image which pixel value is observed in the neighboring region.

6. The moving image encoding device as set forth in claim 5, wherein:

    the index is a numerical value indicative of (i) a continuity of pixel values in the local decoded image which continuity is observed in the region adjacent to the upper side of the encoding target block and (ii) a continuity of pixel values in the local decoded image which continuity is observed in the region adjacent to the left side of the encoding target block.

7. The moving image encoding device as set forth in claim 1 or 2, wherein:

    the calculation means works out the index by referring to a change in pixel value in the local decoded image

27

which change is observed in the neighboring region.

8. The moving image encoding device as set forth in claim 7, wherein:

the index is a numerical value indicative of (i) a degree of a change in pixel value in the local decoded image which degree is observed in the region adjacent to the upper side of the encoding target block and (ii) a degree of a change in pixel value in the local decoded image which degree is observed in the region adjacent to the left side of the encoding target block.

9. The moving image encoding device as set forth in claim 1 or 2, wherein:

the calculation means works out the index by referring to (i) a motion vector for the encoding target block and (ii) a motion vector for an encoded block adjacent to the encoding target block.

10. The moving image encoding device as set forth in claim 9, wherein:

the index is a numerical value indicative of (a) a similarity between (i) the motion vector for the encoding target block and (ii) a motion vector for an encoded block adjacent to the upper side of the encoding target block and (b) a similarity between (i) the motion vector for the encoding target block and (ii) a motion vector for an encoded block adjacent to the left side of the encoding target block.

11. A moving image decoding device for decoding encoded data obtained by encoding, for each block, a difference between an input image and a predicted image, comprising:

calculation means for working out an index indicative of a correlation between (i) a change in pixel value in the input image between frames which change is observed in a decoding target block and (ii) a change in pixel value in a local decoded image between the frames which change is observed in a neighboring region being adjacent to the decoding target block;
a plurality of correction means each for correcting a motion-compensated image based on a change in pixel value in the local decoded image between the frames which change is observed in a respective one of mutually different regions included in the neighboring region; and
selection means for selecting one of the plurality of correction means based on the index, so that the motion-compensated image corrected by the selected correction means is used as the predicted image, in order to reproduce the input image.

FIG. 1

PREDICTED IMAGE 106

CORRECTION
FLAG 107

1

PREDICTED IMAGE GENERATING SECTION

4

CORRECTED MOTION-
COMPENSATED IMAGE
110

2

CORRECTION
METHOD
SELECTING
SECTION

SELECTION RESULT
111

3

10

CANDIDATE
PREDICTED IMAGE
GENERATING SECTION

11

MOTION-
COMPENSATED
IMAGE CORRECTING
SECTION

12

MOTION-
COMPENSATED
IMAGE CORRECTING
SECTION

13

MOTION-
COMPENSATED
IMAGE CORRECTING
SECTION

LOCAL
DECODED
IMAGE 103

MOTION VECTOR
105

14

MOTION-
COMPENSATED
IMAGE GENERATING
SECTION

MOTION-COMPENSATED IMAGE 109

EP 2 315 446 A1

F I G. 2

FIG. 2 — Block diagram (reference 200)

- 20 IMAGE INPUT SECTION
- 23 PREDICTION RESIDUAL CALCULATING SECTION
- 24 ORTHOGONAL TRANSFORMATION SECTION
- 25 QUANTIZATION SECTION
- TRANSFORMATION COEFFICIENT LEVEL 102
- 201 VARIABLE LENGTH CODING SECTION
- 202 ENCODED DATA OUTPUT SECTION
- 26 INVERSE QUANTIZATION SECTION
- 27 INVERSE ORTHOGONAL TRANSFORMATION SECTION
- 28 LOCAL DECODED IMAGE GENERATING SECTION
- 22 PREDICTED IMAGE PROCESSING SECTION
- 21 MOTION DETECTING SECTION
- 29 FRAME MEMORY

PREDICTION RESIDUAL 101

PREDICTED IMAGE 106

INPUT IMAGE 100

ENCODED DATA 108

CORRECTION FLAG 107

LOCAL DECODED IMAGE 103

MOTION VECTOR 105

LOCAL DECODED IMAGE 103

MOTION VECTOR 105

EP 2 315 446 A1

FIG. 3

PREDICTED IMAGE 106    CORRECTION FLAG 107

22

PREDICTED IMAGE PROCESSING SECTION

INPUT IMAGE 100

MOTION VECTOR 105

31 — IMAGE COMPARING SECTION

EVALUATION VALUE R 112

32 — CANDIDATE PREDICTED IMAGE STORING SECTION

PREDICTED IMAGE 106

1 — PREDICTED IMAGE GENERATING SECTION

LOCAL DECODED IMAGE 103

30 — PREDICTED IMAGE SELECTING SECTION

CORRECTION FLAG 107

EP 2 315 446 A1

F I G. 4

```
              ┌─────────────┐
              │    START    │
              └──────┬──────┘
                     │                              ┌──────────┐
                     ▼           ┌─S1                │          │
        ┌────────────────────────────────┐          │          │
        │        SET VALUE OF K           │          │          │
        └────────────────┬───────────────┘          │          │
                         │            ┌─S2            │          │
        ┌────────────────────────────────┐          │          │
        │  SET CORRECTION FLAG FOR MOTION-│          │          │
        │        CORRECTED IMAGE          │          │          │
        └────────────────┬───────────────┘          │          │
                         │            ┌─S3            │          │
        ┌────────────────────────────────┐          │          │
        │     GENERATE PREDICTED IMAGE    │          │          │
        └────────────────┬───────────────┘          │          │
                         │            ┌─S4            │          │
        ┌────────────────────────────────┐          │          │
        │  CALCULATE EVALUATION VALUE OF  │          │          │
        │        PREDICTED IMAGE          │          │          │
        └────────────────┬───────────────┘          │          │
                         │            ┌─S5            │          │
        ┌────────────────────────────────┐          │          │
        │ STORE CORRECTION FLAG FOR MOTION-│         │          │
        │ CORRECTED IMAGE, PREDICTED IMAGE,│         │          │
        │      AND EVALUATION VALUE       │          │          │
        └────────────────┬───────────────┘          │          │
                         │            ┌─S6            │          │
                      ◇ K = 1? ◇──────────NO─────────┘          │
                         │
                        YES         ┌─S7
        ┌────────────────────────────────┐
        │  OUTPUT PREDICTED IMAGE AND     │
        │  CORRECTION FLAG FOR MOTION-    │
        │        CORRECTED IMAGE          │
        └────────────────┬───────────────┘
                         │
              ┌──────────▼──────┐
              │      END        │
              └─────────────────┘
```

F I G. 5

F I G. 6

```
                        ( START )
                            │
                            │        ┌S10
              ┌─────────────────────────────────┐
              │ GENERATE MOTION-COMPENSATED IMAGE│
              └─────────────────────────────────┘
                            │
                            │        ┌S11
              ┌─────────────────────────────────┐
              │  OUTPUT MOTION-COMPENSATED IMAGE │
              └─────────────────────────────────┘
                            │
                            │        ┌S12
                       ╱────────────╲      YES
                  ╱─────────────────────────╲──────────────┐
                  ╲  IS CORRECTION UNNECESSARY? ╱           │
                       ╲────────────╱                       │
                            │ NO                            │
                            │        ┌S13                   │
              ┌─────────────────────────────────┐          │
              │        FIND EDGE STRENGTH        │          │
              └─────────────────────────────────┘          │
                            │                               │
                            │        ┌S14                   │
                       ╱────────────╲                       │
          YES     ╱───────────────────────╲     NO          │
       ┌──────────╲   DOES VERTICAL         ╱──────────┐    │
       │           ╲   EDGE EXIST?         ╱           │    │
       │                ╲────────────╱                 │    │
       │                                               │    │
       │        ┌S15                          ┌S16     │    │
   ╱────────────╲                         ╱────────────╲    │
╱───────────────────╲  YES          NO  ╱───────────────────╲│
╲  DOES HORIZONTAL    ╲────────┐  ┌────╱  DOES HORIZONTAL   ╱ │
 ╲  EDGE EXIST?      ╱         │  │     ╲  EDGE EXIST?      ╱  │
   ╲────────────╱             │  │       ╲────────────╱      │
       │ NO                   │  │            │ YES           │
       │      ┌S17            │  │      ┌S18  │      ┌S19     │
  ┌─────────────┐      ┌─────────────┐      ┌─────────────┐  │
  │ SELECT MOTION-│      │ SELECT MOTION-│      │ SELECT MOTION-│  │
  │ COMPENSATED   │      │ COMPENSATED   │      │ COMPENSATED   │  │
  │ IMAGE         │      │ IMAGE         │      │ IMAGE         │  │
  │CORRECTING     │      │CORRECTING     │      │CORRECTING     │  │
  │SECTION 12     │      │SECTION 11     │      │SECTION 13     │  │
  └─────────────┘      └─────────────┘      └─────────────┘  │
       │                     │                     │          │
       └─────────────────────┼─────────────────────┘          │
                             │                                │
                             │        ┌S20                    │
              ┌─────────────────────────────────┐            │
              │  CORRECT MOTION-COMPENSATED IMAGE│            │
              └─────────────────────────────────┘            │
                             │◄──────────────────────────────┘
                             │        ┌S21
              ┌─────────────────────────────────┐
              │  OUTPUT MOTION-COMPENSATED IMAGE │
              └─────────────────────────────────┘
                             │
                          ( END )
```

FIG. 7

EP 2 315 446 A1

FIG. 8

PREDICTED IMAGE 106

1a

CORRECTION FLAG 107

PREDICTED IMAGE GENERATING SECTION

4

CORRECTED MOTION-COMPENSATED IMAGE 110

2a

CORRECTION METHOD SELECTING SECTION

SELECTION RESULT 111

3

10

CANDIDATE PREDICTED IMAGE GENERATING SECTION

MOTION VECTOR 105

14

MOTION-COMPENSATED IMAGE GENERATING SECTION

11

MOTION-COMPENSATED IMAGE CORRECTING SECTION

12

MOTION-COMPENSATED IMAGE CORRECTING SECTION

13

MOTION-COMPENSATED IMAGE CORRECTING SECTION

LOCAL DECODED IMAGE 103

MOTION-COMPENSATED IMAGE 109

F I G. 9

```
                    START
                      |
                     S30
   ┌──────────────────────────────────────┐
   │  GENERATE MOTION-COMPENSATED IMAGE     │
   └──────────────────────────────────────┘
                      |
                     S31
   ┌──────────────────────────────────────┐
   │  OUTPUT MOTION-COMPENSATED IMAGE       │
   └──────────────────────────────────────┘
                      |
                     S32
            < IS CORRECTION UNNECESSARY? >──── YES ──┐
                      |                              |
                     NO                              |
                     S33                             |
   ┌──────────────────────────────────────┐         |
   │ FIND DISCONTINUITY IN REGION ADJACENT │         |
   │           TO TARGET REGION            │         |
   └──────────────────────────────────────┘         |
                      |                              |
                     S34                             |
      YES ──< IS REGION ADJACENT TO UPPER SIDE       |
             DISCONTINUOUS? >── NO                    |
       |                              |              |
      S35                            S36             |
< IS REGION ADJACENT      < IS REGION ADJACENT       |
  TO LEFT SIDE             TO LEFT SIDE              |
  DISCONTINUOUS? >─YES     DISCONTINUOUS? >─YES      |
       |          |     NO   |          |           |
      NO         S38         S38        S39          |
      S37                                            |
```

SELECT MOTION-COMPENSATED IMAGE CORRECTING SECTION 12    S37

SELECT MOTION-COMPENSATED IMAGE CORRECTING SECTION 11    S38

SELECT MOTION-COMPENSATED IMAGE CORRECTING SECTION 13    S39

CORRECT MOTION-COMPENSATED IMAGE    S40

OUTPUT MOTION-COMPENSATED IMAGE    S41

END

FIG. 10

PREDICTED IMAGE 106

EP 2 315 446 A1

1b

CORRECTION
FLAG 107

PREDICTED IMAGE GENERATING SECTION

4

CORRECTED MOTION-
COMPENSATED IMAGE
110

2b

CORRECTION
METHOD
SELECTING
SECTION

SELECTION RESULT
111

3

10

CANDIDATE
PREDICTED IMAGE
GENERATING SECTION

11

MOTION-
COMPENSATED
IMAGE CORRECTING
SECTION

12

MOTION-
COMPENSATED
IMAGE CORRECTING
SECTION

13

MOTION-
COMPENSATED
IMAGE CORRECTING
SECTION

LOCAL
DECODED
IMAGE 103

MOTION VECTOR
105

14

MOTION-
COMPENSATED
IMAGE GENERATING
SECTION

MOTION-COMPENSATED IMAGE 109

F I G. 1 1

```
                      ┌─────────┐
                      │  START  │
                      └─────────┘
                           │        ┌S50
              ┌────────────────────────────────┐
              │  GENERATE MOTION-COMPENSATED IMAGE  │
              └────────────────────────────────┘
                           │        ┌S51
              ┌────────────────────────────────┐
              │  OUTPUT MOTION-COMPENSATED IMAGE  │
              └────────────────────────────────┘
                           │        ┌S52
                        ◇ IS CORRECTION UNNECESSARY? ◇──── YES ──────┐
                           │ NO       ┌S53                            │
              ┌──────────────────────────────────────────────────┐  │
              │  FIND CHANGE IN PIXEL VALUE IN REGION ADJACENT TO TARGET REGION  │  │
              └──────────────────────────────────────────────────┘  │
                           │        ┌S54                            │
                        ◇ IS CHANGE IN PIXEL VALUE IN REGION ADJACENT TO UPPER SIDE LARGE? ◇
              YES ────────┘                              └──── NO
```

IS CHANGE IN PIXEL VALUE IN REGION ADJACENT TO UPPER SIDE LARGE?    S54

IS CHANGE IN PIXEL VALUE IN REGION ADJACENT TO LEFT SIDE LARGE?    S55    YES

IS CHANGE IN PIXEL VALUE IN REGION ADJACENT TO LEFT SIDE LARGE?    S56    NO

SELECT MOTION-COMPENSATED IMAGE CORRECTING SECTION 12    S57

SELECT MOTION-COMPENSATED IMAGE CORRECTING SECTION 11    S58

SELECT MOTION-COMPENSATED IMAGE CORRECTING SECTION 13    S59

CORRECT MOTION-COMPENSATED IMAGE    S60

OUTPUT MOTION-COMPENSATED IMAGE    S61

END

FIG. 12

PREDICTED IMAGE 106

1c

PREDICTED IMAGE GENERATING SECTION

CORRECTION FLAG 107

4

CORRECTED MOTION-COMPENSATED IMAGE 110

2c

CORRECTION METHOD SELECTING SECTION

SELECTION RESULT 111

3

10

CANDIDATE PREDICTED IMAGE GENERATING SECTION

11

MOTION-COMPENSATED IMAGE CORRECTING SECTION

12

MOTION-COMPENSATED IMAGE CORRECTING SECTION

13

MOTION-COMPENSATED IMAGE CORRECTING SECTION

LOCAL DECODED IMAGE 103

MOTION VECTOR 105

14

MOTION-COMPENSATED IMAGE GENERATING SECTION

MOTION-COMPENSATED IMAGE 109

EP 2 315 446 A1

F I G. 1 3

```
                              ┌─────────┐
                              │  START  │
                              └─────────┘
                                   │        ┌ S70
                    ┌──────────────────────────────────┐
                    │  GENERATE MOTION-COMPENSATED IMAGE │
                    └──────────────────────────────────┘
                                   │        ┌ S71
                    ┌──────────────────────────────────┐
                    │  OUTPUT MOTION-COMPENSATED IMAGE   │
                    └──────────────────────────────────┘
                                   │        ┌ S72
                              ◇──────────────◇                    YES
                         ◇  IS CORRECTION UNNECESSARY? ◇──────────────┐
                              ◇──────────────◇                        │
                                   │ NO       ┌ S73                    │
                    ┌──────────────────────────────────────────┐      │
                    │  FIND SIMILARITY BETWEEN MOTION VECTORS    │      │
                    │  OF TARGET REGION AND NEIGHBORING REGION   │      │
                    └──────────────────────────────────────────┘      │
```

S74 — ARE MOTION VECTORS FOR VERTICALLY ADJACENT REGIONS SIMILAR?

YES → S75 — ARE MOTION VECTORS FOR HORIZONTALLY ADJACENT REGIONS SIMILAR?

NO → S76 — ARE MOTION VECTORS FOR HORIZONTALLY ADJACENT REGIONS SIMILAR?

S77 (NO) — SELECT MOTION-COMPENSATED IMAGE CORRECTING SECTION 12

S78 (YES/NO) — SELECT MOTION-COMPENSATED IMAGE CORRECTING SECTION 11

S79 (YES) — SELECT MOTION-COMPENSATED IMAGE CORRECTING SECTION 13

S80 — CORRECT MOTION-COMPENSATED IMAGE

S81 — OUTPUT MOTION-COMPENSATED IMAGE

END

F I G. 1 4

F I G. 1 5

(a)

153

152

151

142

(b)

141

154

142

140

| INTERNATIONAL SEARCH REPORT | International application No. |
|---|---|
| | PCT/JP2009/063916 |

**A. CLASSIFICATION OF SUBJECT MATTER**
H04N7/32(2006.01)i

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-244749 A  (KDDI Corp.), 08 September, 2005 (08.09.05), Full text; all drawings (Family: none) | 1-11 |
| A | WO 2006/101126 A1  (Matsushita Electric Industrial Co., Ltd.), 28 September, 2006 (28.09.06), Full text; all drawings & US 2009/0052526 A1    & EP 1874059 A1 | 1-11 |
| A | WO 2008/053746 A1  (Nippon Telegraph And Telephone Corp.), 08 May, 2008 (08.05.08), Full text; all drawings & EP 2079242 A | 1-11 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 August, 2009 (27.08.09) | 08 September, 2009 (08.09.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 10136385 A

**Non-patent literature cited in the description**

• VCEG-AH19: Weighted Prediction using Neighboring Pixels. *ITU-T SG16 Q6, Meeting in Antalya,* January 2008